**Europäisches Patentamt**

**European Patent Office**

**Office européen des brevets**

(19)

(11) Publication number: **0 158 821**
**B1**

(12)                    EUROPEAN PATENT SPECIFICATION

(45) Date of publication of patent specification: **04.11.87**    (51) Int. Cl.⁴: **B 64 G 1/62, B 64 G 9/00**

(21) Application number: **85102760.7**

(22) Date of filing: **11.03.85**

(54) Apparatus and methods of extraterrestrial transportation.

(30) Priority: **12.03.84 US 588711**
**20.08.84 US 642336**

(43) Date of publication of application:
**23.10.85 Bulletin 85/43**

(45) Publication of the grant of the patent:
**04.11.87 Bulletin 87/45**

(84) Designated Contracting States:
**DE FR GB**

(56) References cited:
**US-A-3 421 714**
**US-A-4 216 058**
**US-A-4 344 913**
**US-A-4 436 695**

(73) Proprietor: **Marwick, Edward F.**
**1121 E. Tapatio Drive**
**Phoenix Arizona 85020 (US)**

(72) Inventor: **Marwick, Edward F.**
**1121 E. Tapatio Drive**
**Phoenix Arizona 85020 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Field of the invention

This invention relates to extraterrestrial transportation and, more particularly to apparatus and methods whereby spaceships, satellites, fabricated structures, and/or equipment is used for the cheap transportation of items and materials from the Earth and the Moon to lower Earth orbiting locations.

### Background and summary of the invention

In accordance with this invention, various structures are used for the containment of such cargoes that have an entering velocity of more than 1.6 km per second, in particular between 1.6 and 20 km per second.

The present invention provides a much cheaper means of transport from Earth and from distant Earth orbiting satellites to a lower Earth orbiting satellite and for the transport of materials and supplies to the Moon. Also disclosed is a method of transporting materials, supplies, and fragile items from lower Earth orbit to higher Earth orbit or from such higher orbit to lower Earth orbit.

Prior to, or concurrently with the practice of this invention, it may be desirable to build Earth orbiting space stations, facilities on the Moon, and spaceships.

A significant aspect of this invention is the capture-containment of cargo-loads in a chamber. Such a chamber can be on a massive solid astronautical body which lacks an atmosphere, such as the Moon, or the chamber can be part of a man-made satellite. Such a chamber could be very long and relatively narrow and be in a facility where an incoming packaged-load is decelerated over a distance of many hundreds of meters. Or the very large crash-containing chamber could be less than twice as long as wide and the crash-load is fragmentized as it impacts with a massive assemblage of matter about the center of that chamber.

The matter making up said assemblage could be a liquid slurry and/or a plurality of solid pieces. Some of the crash-load could be of packaged materials or items which retain their identity during and after the impact induced deceleration. That is that much of the crash-load fragmentizes but there is at least one portion which remains securely packaged and is later recovered intact. Likewise in the packaged-load which is decelerated in a narrow chamber over a very long distance some of the outer covering is worn away or fragmentized. Instead of being fragmentized into solid pieces the crash-loads and the outer coverings of packaged-loads could be vaporized or liquified.

In the five embodiments of this invention there is disclosed the transport of cargo as crash-loads and/or as packaged-loads, such cargo, being as a slug or package which has a mass in excess of ten kilograms, enters into a large chamber (which has a volume in excess of ten cubic meters) and impacts with materials thereabout that are unattached. The total mass of such unattached materials within the large chamber is more than a hundred times the mass of the package or slug of cargo.

It should be noted that the extraterrestrial material used in the practice of this invention could come from astroids, Mars, Deimos, and/or Phobos. Also this invention could be practiced where a satellite-facility is in low orbit of the Moon and/or of Mars.

For the building of facilities on the Moon, many pieces of equipment, apparatus, and supplies that can withstand very great deceleration forces need to be delivered onto the Moon. Soft-landing of such cargoes on the Moon which constitutes the state of the art requires much additional fuel for landing and additional fuel to return such a landing ship to its base. This problem is overcome by the method of transporting a cargo according to claim 1 and the extraterrestrial facility for receiving high-velocity cargo according to claim 9. The first embodiment of this invention is of a packaged-load crash-capturing facility on the Moon which is so designed and constructed that the maximum deceleration therein is such that the suitably packaged cargo is able to be crash-landed without damage to the facility. The outer parts of the packaged-load and much of the inner packing materials become useful scrap.

A packaged-load is transported from a base about the L-1 point of the Earth-Moon system by being attached to a reuseable rocket that directs it towards an opening of the long deceleration chamber on the Moon. The rocket separates from the packaged-load before chamber entry and returns to L-1. The packaged-load is first decelerated slightly by collision with some dust then there is more deceleration by impact with sprays which become progressively thicker. After impacting a plurality of column-globs the packaged-load collides with a pool of liquid in which it stops.

The second embodiment of this invention is of a low Earth orbiting crash-load capturing satellite-facility which is designed to crash-capture cargoes from both the Earth and Moon. Inside a containing chamber the crash-load impacts with a debris-assembly which consists mostly of ferromagnetic particles that have been pushed into position along the crash-load's trajectory.

In the third embodiment of this invention there is a net downward force of about a centi-gravity in the containing chamber of the crash-load capturing satellite-facility due to a tethered constellation. A long tub-shaped pusher places the debris assembly along the chamber's center-line for impactation. And the resulting debris slowly falls back into the tub-pusher at the bottom of the chamber.

The fourth embodiment of this invention is of an Orbital Transfer Vehicle (OTV) which transports great masses of materials, supplies, etc. from a very low Earth orbit to a higher Earth orbit by capturing only prograde traveling crash-loads of lunar materials. By capturing retrograde traveling crash-loads of lunar materials or by capturing crash-loads from Earth the orbital transfer vehicle returns to a lower Earth orbit.

The containing chamber of this orbital transfer vehicle has no net downward force and the crash-assembly of mostly ferromagnetic particles is formed in the desired configuration by magnetic forces produced by very large coils which are far from the chamber's center-line. Likewise the crash-loads containing ferromagnetic material are directed to the desired trajectory and onto impactation with the crash-assembly by large coils which are outside of and in front of the containing chamber.

The chamber's walls are protected from crash-load and crash-assembly impactation debris by a very massive shield and chain assembly which is somewhat positioned by the same magnetic forces that position the crash-assembly.

The fifth embodiment of this invention is of an extremely low Earth orbiting satellite-facility which captures crash-loads of lunar materials and also scoops up gases from the Earth's uppermost atmosphere. Also attached to this satellite-facility is an upward directed tether which is a source of electrical power. The drag due to scooping and electrical power production is balanced by the capturing of prograde traveling higher velocity crash-loads of lunar materials.

The practice of the second, third, fourth, and fifth embodiments of this invention requires at least one base on the Moon from which materials can be transported to a location or locations off the Moon. Most probably these materials are then fabricated into crash-loads which are then launched into an orbit which will cause them to intersect with an orbiting satellite-facility. Note that there is great flexibility in the locations and means of transportation and launchings.

The locations from which crash-loads are launched, and the Earth orbiting satellite-facilities are both preferably in the plane of the Earth's equator. Hence crash-loads or the materials from which the crash-loads will be made are transferred from an orbit which is in the plane of the Moon's orbit about the Earth to an orbit which is in the plane of the Earth's equator.

Brief description of the drawings

A better understanding of this invention will be gained when the following detailed description is read in conjunction with the appended drawings, wherein:

Fig. 1 is a drawing showing relative location of the Earth, Moon, bases, etc.

Fig. 2 gives, in greater detail, inner portions of Fig. 1.

Fig. 3 is a graph showing relative energy needed for different trips and orbital changes.

Fig. 4 is a fragmentary cross-sectional view of the North polar region of the moon.

Fig. 5 is a somewhat schematic cross-sectional view of the first embodiment of this invention.

Fig. 5A is a fragmentary cross-sections view of the column-glob forming means used in the first embodiment.

Fig. 6 is a somewhat schematic cross-sectional view of the rocket adjusting means and of a packaged-load.

Fig. 7 is a generally schematic diagram showing relative positions of the Earth, low Earth orbiting satellite-facility, etc.

Fig. 8 is a generally schematic cross-sectional view of the second embodiment of this invention.

Fig. 9 is a generally schematic cross-sectional view along the center-line of a crash-load from Earth.

Fig. 10 is a generally schematic representation of the Earth orbits of satellites and crash-loads.

Fig. 11 is a generally schematic cross-sectional view along the center-line of a pusher 3 as shown in Fig. 8.

Fig. 12 is a generally schematic cross-sectional view of an entryway and bumper-doors of Fig. 8.

Fig. 13 is a cross-sectional view taken generally along the line 4A—4A of Fig. 12.

Fig. 14 is a generally schematic cross-sectional view of the third embodiment of this invention.

Fig. 15 is a cross-sectional view taken generally along the line of 6—6 of Fig. 14.

Fig. 16 is a generally schematic cross-sectional view taken along the line 7—7 of Fig. 14.

Fig. 17 is a generally schematic cross-sectional view of the fourth embodiment of this invention.

Fig. 18 is a generally schematic cross-sectional view of a crash-load of lunar materials.

Fig. 19 is a generally schematic cross-sectional view of a link 151 and other links as shown in Fig. 17.

Fig. 20 is a generally schematic drawing of the fifth embodiment of this invention.

Fig. 21 is a generally schematic drawing of a cross-section of a portion of means 340 of Fig. 20.

Detailed description of the preferred embodiments

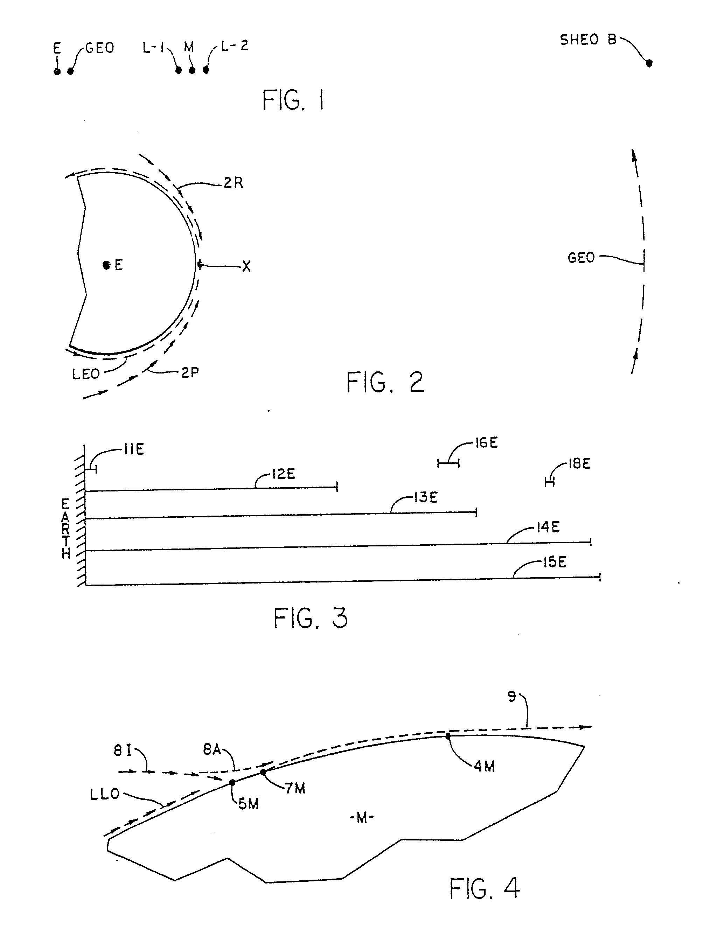

Referring now to the drawings, Fig. 1 illustrates the relative distances between the Earth E and the orbits of L-1, the Moon M, L-2, a super high Earth orbiting base (SHEOB), and geostationary orbit GEO.

Fig. 2 shows, in the plane of the Earth's equator, the relative distances between the surface of the Earth E, a low Earth orbit LEO of about 400 km altitude, and a geostationary orbit GEO. Also shown is a preferred path 2P which a crash-load from a super high Earth orbiting base would take before its impact with a low Earth orbiting satellite-facility at a point X. Path 2R is a retrograde course for a collision at point X.

The relative energies needed to move a unit mass from Earth are schematically depicted by the lengths of lines in Fig. 3. Line 11E is the energy expended to go straight up some 200 km; line 12E is the energy needed to go into a low Earth orbit; line 13E is from Earth to GEO; line 14E is from Earth to L-1 or to the Moon by a crash landing; line 15E is from Earth to a super high Earth orbiting base. Line 16E represents the energy for either a soft landing the mass from L-1 or L-2 onto the Moon or for raising that mass from the Moon to either L-1 or L-2. Line 18 represents the small quantity of energy needed to move the mass from L-2 to a super high Earth orbiting base or from such a super high Earth orbiting base to a low Earth orbiting satellite-facility.

At least one large lunar base with many facilities is necessary for the practice of this embodiment. One of many possible arrangements is shown in Fig. 4 which is a fragmentary cross-section of the north polar region of the Moon in the plane made by the center of the Moon, the north pole of the Moon, and the center of the Earth. LLO is the path of a low lunar polar orbiting satellite while 8I is the path of packaged-loads to the main facility on the surface of the Moon located at 5M which is close to the north pole of the Moon 4M. Such a location could be selected if recoverable water deposits are found in such polar regions. A large mass-driver located at 7M could be used to throw slugs of lunar material by trajectory 9 to a catcher located about the L-2 point.

The angle path 8I makes with the surface of the Moon is small and the energy needed to cause the adjuster rocket to avoid impact with the surface of the Moon (as shown by path 8A) will be small. The cost of construction of the facility would be lower if it were located on the Moon's equator at the point furthest from the Earth where the path of a packaged-load from L-1 would be almost parallel to the surface. Hence less excavation is needed for the facility and much less energy is needed for altering the path of the adjusting rocket.

As is well known, a base on or about the point L-1 of the Earth-Moon system is almost stable and very little power with reaction mass or the use of solar sails are needed to maintain a spacestation there. A small push from L-1 could cause the packaged-load with the adjusting rocket to assume the path 8I. The total quantity of energy (meaning rocket fuel) expended for delivering the packaged-load into the lunar based collision-chamber (line 18E) is a very small fraction of what is needed to soft-land the same mass of cargo onto the surface of the moon (line 16E).

Recoverable impure iron exists in lunar soils and could be easily procured by the use of electromagnets sweeping such soil. Such impure iron contains almost 10% nickel and shall hereafter be called LIN from Lunar Iron-Nickel. Lin could be used in facility constructions on the Moon and could be a major export from the Moon.

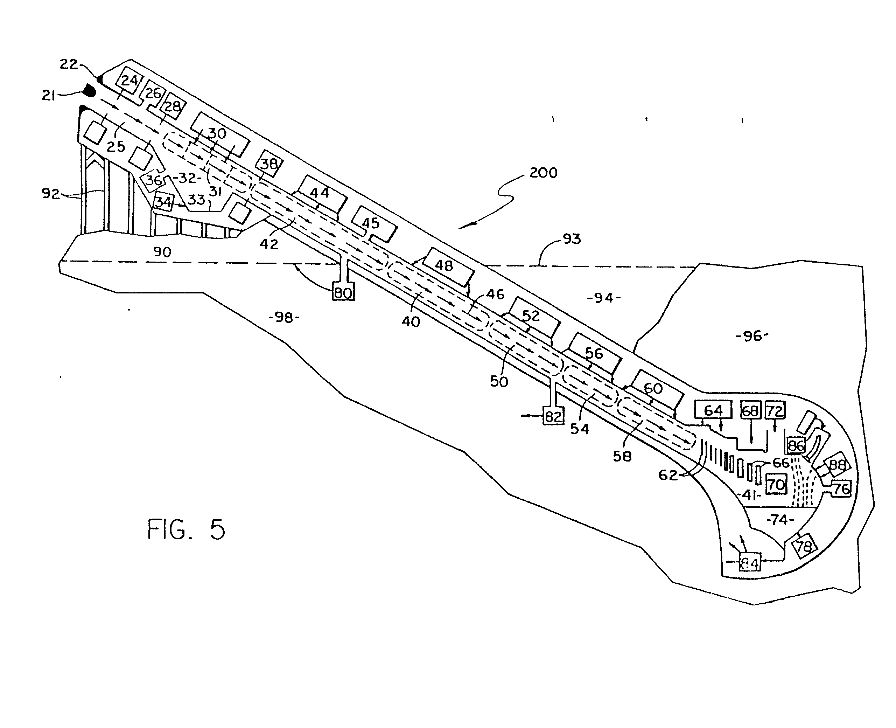

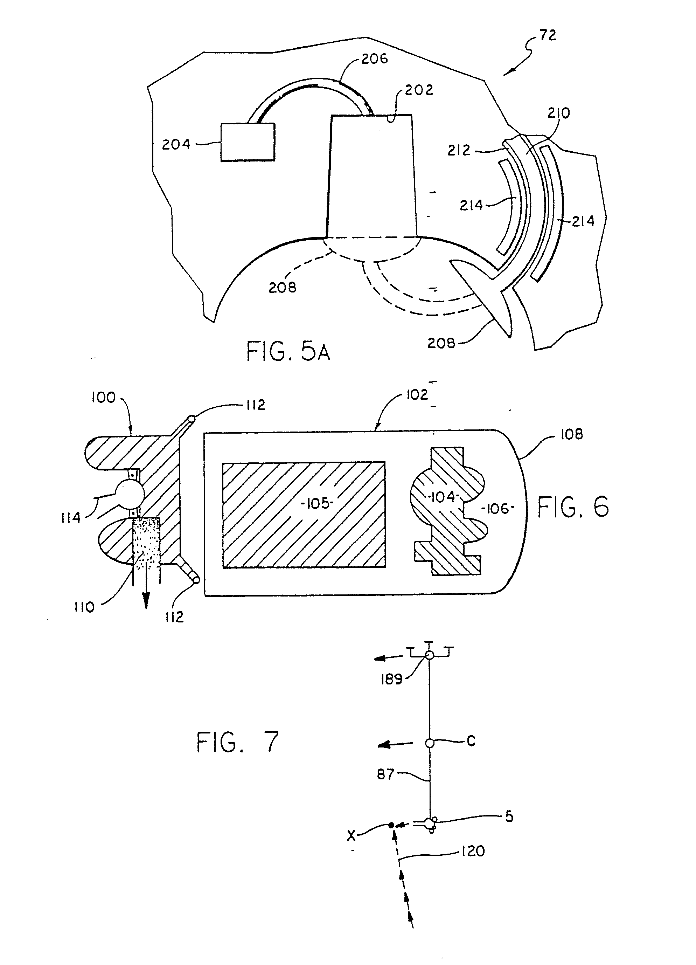

A preferred lunar-based collision chamber and facility 200 is shown in Fig. 5 in which there is a long decelerating chamber which is aligned to receive a packaged-load 21 traveling along the path 8I of Fig. 4. The opening of the facility 200 is surrounded by very strong and sturdy protective bumpers 22 and there are a plurality of shutters. Outer shutter 24 and middle shutter 28 defining an outer chamber 25. An inner shutter 38 and the middle shutter 28 define a middle chamber 32 therebetween.

The outer chamber 25 has a gas evacuation means 26 operably associated therewith which serves to substantially evacuate the chamber 25 before the shutter 24 is opened. Middle chamber 32 includes a dust dropping means 30 for dropping a cloud of sodium hydroxide dust 31. Such dust cloud 31 serves three purposes: (1) It slightly decelerates the incoming packaged-cargo; (2) it absorbs most of the water vapor that is present in chamber 32; and (3) The cloud of dust 31 is so formed that there is a greater density of dust further from the chamber's center-line and hence the path of the packaged-load is slightly directed towards the chamber's center-line. An enlarged lower portion 33 of the middle chamber 32 also contains a dust gathering means 34 which collects the dust after the passage of the packaged-load.

Not shown are the dust moving means and the dust dehumidifying means. Chamber 32 has a gas evacuation means 36 for removing gas therefrom before the middle shutter 28 is opened.

Inside of shutter 38 is the inner chamber 40 which has a length of about 300 meters and an enlarged end portion 41. Positioned along chamber 40 are a plurality of liquid delivering means which are configured to produce volumes of fluid in ever-increasing density. A mist cloud forming means 44 is located near the shutter doors 38. Further along the chamber is a droplet cloud forming means 48 which is followed in turn by drop forming means 60. Each of these means consists of tanks and plumbing for holding quantities of a suitable liquid, preferably impure sodium hydroxide (containing enough water so that it is in the liquid phase), for introduction in the path of an entering packaged-load 21. Suitable plumbing directs the fluid through the use of pumps (not shown) toward nozzles providing entry into the chamber 40 in a suitable form.

Also in the chamber 40 is an inner chamber gas evacuation means 45 for withdrawing gas from the chamber. Liquid entering the chamber flows down a lower portion thereof for removal through suitable draining means 80, 82, and 84. The liquid is then returned to the various forming means for storage and re-entry into the chamber in association with arrival of packaged-load 21.

In the end portion 41 of the inner chamber 40 are positioned a plurality of column-glob forming means for the purpose of interposing substantially contiguous masses of liquid in the path of the packaged-load 21 so that its motion will stop within the chamber. A thin column-glob forming means 64 releases thin column-globs 62 into the chamber. A thicker glob forming means 68 release thicker column-globs 66 into the chamber. A large glob 70 is caused to be released for motion to the center of the inner chamber end portion 41 by the large glob forming means 72.

Each of the column-glob forming means has a chamber for collecting liquid, a releasable closure therebeneath and means for introducing liquid into the chamber. Such structure is described in more detail in my U.S. Patent 4,436,695 which issued March 13, 1984 and a preferred embodiment is illustrated in Fig. 5A wherein a chamber 202 is filled with liquid from a suitable liquid reservoir 204 through pipes 206 which should be provided in number and size the time requirements for filling the chamber 202. A closure 208, shown in its retracted position in solid lines and its closed position in dashed lines, seals the bottom of the chamber 202 to facilitate the filling of the chamber with liquid. At the instant that it is desired to release the column-glob, the closure is retracted. The closure may be of any suitable means which will provide sufficient speed of motion so that the column-glob can then fall freely and also has sufficient structural strength. In this embodiment, the closure has a shaft portion 210 which fits into a suitable opening 212 in the chamber wall and is moved between its retracted and closed positions by coils 214 forming the stator of a linear induction motor to magnetically move the shaft. Thus, retraction of the enclosure of the chamber 202 can be swiftly accomplished so that column-globs can be gravitationally released toward the desired point in the chamber 40 to be impacted by a packaged-load 21.

Referring again to Fig. 5, end portion 41 also contains upper spray means 86 and end spray means 88 which serve largely to protect the walls of the chamber from damage. All of the liquid released into the end portion 41 descends into a bottom pool 74 from which it is withdrawn by bottom draining means 84 for treatment and reuse.

A gas evaporation means 76 aids the evacuation of the chamber 40 and a packaged-load removal means 78 is positioned at the bottom of portion 41 for the extraction of packaged-loads from the pool 74.

At the instant the packaged-load 21 enters the facility 200, the plurality of means for causing rapid deceleration of the packaged-load 21 come into action. If a constant deceleration of 9,600 m/sec² is maintained over a distance of about 300 meters, the time between entry and rest is about a quarter-second. Different "clouds" of matter into which the packaged-load collides become increasingly more dense until at the end the packaged-load is slowed to a stop in pool 74.

The shutter 24, 28, and 38 are only open for the instant that the packaged-load 21 is passing through. By having very fast acting shutters or shutter doors and by having extremely low pressure of gas within the chamber 25 (measurable in fractions of a micron of mercury) the loss of matter (mostly water vapor) with each packaged-load will be on the order of a gram of mass.

The working liquid in this facility is an impure sodium hydroxide that contains some water, potassium hydroxide, and lesser quantities of other hydroxides and miscellaneous materials, most of which are in the form of minute insoluble particles. However, different working liquids and/or dust particles could be used. For example, a cool mixture of molten sodium and potassium has a vapor pressure of almost zero.

It is possible to provide a small amount of correction of the packaged-load's trajectory deviation from the center-line of the chambers 32 and 40 by having at the instant of packaged-load travel through the chambers that the density of dust and liquid is greater at increasing distance from the center-line. For example, at the instant of travel through at a given point on the center-line the mass density is about 100 grams per liter, a quarter of a meter from the center-line the mass density is about 110 grams per liter, a half meter from the center-line the density is 120 grams per liter, three-quarters of a meter from the center-line the density is 130 grams per liter, and a meter from the center-line the mass density about 140 grams per liter.

In order to get these approximate densities the means 30 dropping the dust cloud 31, the means 44 spraying the mist cloud 42, the means 48 spraying the droplet cloud 46, the means 52 spraying the cloud of drops 50, the means 56 jetting the jet cloud 54, and the means 60 forming a liquidish cloud 58 are so programmed. Note that along the center-line the mass density of material is progressively greater as you go closer to the portion 41.

Probably the most exacting task is to get the path 8l to almost coincide with the center-line of the chamber 32. After much calculation with the radars, control means, and packaged-load's rocket control means there could be practice runs made a false target point to test the accuracy and reliability of the systems without having to run the risk of the packaged-loads crashing into the outside portions of the facility 200.

Because the trajectory 8l is not parallel to the surface of the Moon, about one-third of the facility 200 is built into an excavated, cave-like portion, about another one-third is under the surface level 93 in a portion 94 that has been excavated, and the balance is above the surface level and supported by resting on excavated material 90 and a plurality of structural members or posts 92. Note that some of the Moon 98 is above the end portion 41 as portion 96.

Fig. 6 shows a packaged-load rocket adjusting means 100 and a packaged-load 102 immediately after separation. Low density cargo 105, which could be of food, is preferably positioned behind density cargo 104, which could be heavy machinery. Packing 106 consists preferably of useful materials such as plastic chips and/or chips of aluminum alloy. All are contained within a durable shell 108 that is strong enough to withstand the very rapid decelerating impactations and has an outer surface which does not react chemically with sodium hydroxide. Shell 108 could have an outer surface of copper, plastic, graphite, etc. while its inside could be of aluminum alloy. The materials used for the packing 106 and shell 108 are preferably of most useful substances that could be used on the Moon for fabrication into desired items. The length of the packaged-load is preferably about two meters and its total mass is about two tonnes.

The rocket adjusting means 100 is shown blasting quickly from path 8I into path 8A (as shown in Fig. 4) by the use of solid rocket means 110. Note that any suitable coupling means 112 may be used to secure the rocket adjusting means 100 to the packaged-load from when the both leave L-1 until they separate. Coupling means 112 is so designed that the action of separation does alter the orientation and path 8I of the packaged-load 102.

Until that instant of separation, the means 100 controls the path of travel and the orientation of the packaged-load 102 by use of its rocket motor 114 which uses storable liquid fuels and then brings the means 100 back to L-1 for reuse. The use of a quick acting solid fuel rocket 110 is preferred so that is is possible to control the packaged-load as long as possible. Thusly, separation occurs very close to the surface of the Moon where only a quick firing solid rocket could provide the needed thrust quickly enough.

The practioner of this invention might elect to have a rocket-launcher vehicle (not shown) which uses hydrogen and oxygen for placing the combination 100—102 into almost the correct path 8I. Such a rocket-launcher means would blast off with combination 100—102 from L-1; place the combination 100—102 into almost the correct path 8I; separate therefrom, and return to L-1; all of which takes place in the order of an hour. The uses of such a rocket-launcher permits the rocket adjusting means 100 to be much smaller and to use much less storable fuel.

Also it is possible that this invention could be practiced without the use of the reuseable rocket adjusting means 100. Instead the packaged-load would have firmly attached to it a rocket adjusting means that remains attached thereto as they are decelerated in the facility 201. Much of the rocket adjusting means could be salvaged and shipped to L-1 for reuse. In fact there could be reuseable packaged-load shells with rocket adjusters that are decelerated in the facility 201, have their cargo separated out, and are then shipped back to L-1 for reuse.

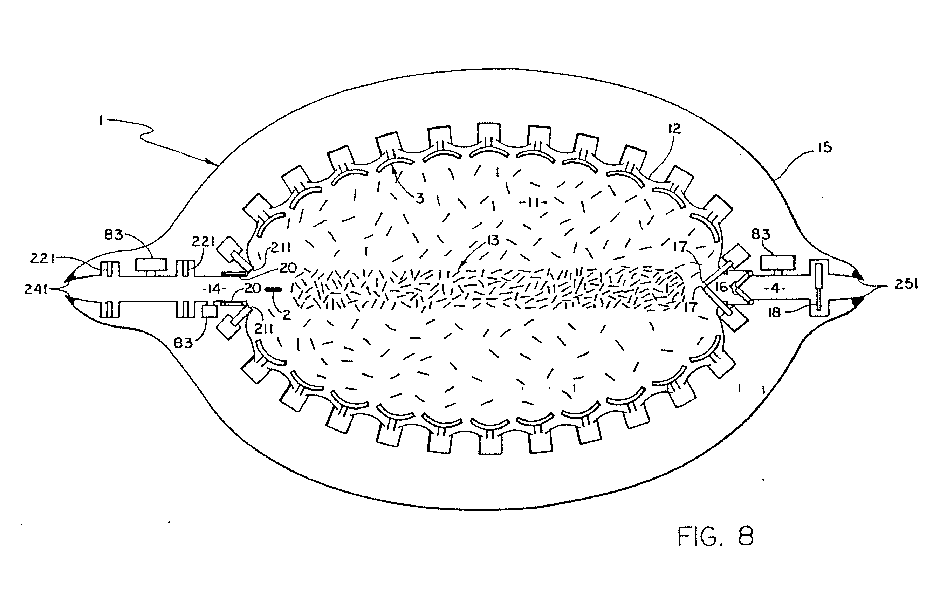

Fig. 8 shows a low Earth orbiting satellite-facility 1 which is of the second embodiment of this invention at an instant just before a crash-load 2 from Earth collides with a debris assembly 13 within a large containing chamber 11 which is somewhat ellipsoidal in shape with a minor diameter of about 10 meters and a major diameter of about 18 meters. The debris assembly 13 which is located along and about the major axis or center-line of the chamber 11 is formed by debris which is pushed there by a great plurality of pushers 3 located along the wall 12 of the chamber 11.

The crash-load 2 from Earth is shown entering through the longer entryway 14 while a shorter entryway 4 is doubly sealed shut with strong door 16 and shutters 18. In the longer entryway 14, corresponding strong doors 20 and bumper doors 211 are open wide as are the two sets of shutters 221. In addition to those doors and shutters thin membrane disposable shutters (not shown) could be used.

If the chief cargo crashing into the debris assembly is very volatile, such as cryogenic liquid methane, much less gas would be lost by the use of such membrane shutters since only a hole a little larger than the cross-section area of the crash-load exists after the passage. After the pressure within a chamber has been reduced to less than a mm of Hg the very thin membrane of such materials as plastics and/or aluminum alloy are placed in such chamber and are able to withstand such very low pressures. The membrane shutters, on the average, are a fraction of a mm in thickness and are so constructed that the crash-load causes a minimal size hole when it crashes through (minimal tearing, etc.). After use such membrane shutters are withdrawn and the materials thereof are used for the manufacture of new membrane shutters.

The gas and/or vapor pressure. existing an instant after the crashing of a crash-load within the chamber 11 depends upon the nature of the materials used in the debris assembly and of the materials of the crash-load. Also the velocity of impact is important in the production of shock and high localized heating which produces molecular changes (decomposition) and vaporizations.

One reason for providing two shutters 221 in the entryway 14 and making it longer than entryway 4, which has but one shutter 18, is because crash-loads from Earth may contain hydroxides and/or hydrocarbons which could decompose because they have about 2.3 time the velocity of lunar material crash-loads. For the same reason, bumpers 241 at the outside entrance of the longer entryway 14 are made heavier and stronger than corresponding bumpers 251 at the outside entrance of the shorter entryway 4.

The practitioner of this embodiment can practice great leeway in his use of shutters, doors, length of entryways, and in gas and vapor removing means. It is intended to obtain the minimal loss of material after crash-load crashes with the debris assembly of the satellite 1 at the least practicable expense.

There could be a great variety of crash-loads fed into this satellite 1 from Earth and of lunar materials. An example of the possible mixtures of crash-loads is as follows:

From earth mostly plastics-tar $(CH_2)$ with aluminum alloy scrap from the materials of rocket motors, fuel tanks and casings and an ellipsoidal portion containing chromium and lithium hydride and some spheroids of brass.

From the Moon, beneficiated lunar soil and lin. That beneficiated lunar soil contains over 40% oxygen and such soil may be processed into oxygen for use as rocket fuel and resulting silicon and metals could be used for construction, reaction-mass, or for radiation shielding.

The debris assembly 13 consists essentially of the debris from such crash-loads although at the beginning it could be a mixture of ground-up spent rockets and fuel tanks and of lin. Logic indicates that it would be cheaper that much of the material needed for the construction of the first satellite built of this embodiment come from the Moon. Such "debris" might be somewhat "manufactured". For example, a piece of lin of about a cubic centimeter is wrapped with thinned aluminum alloy scaps and then compressed so that the "manufactured" piece of "debris" will hold together and contain about 10% to 20% ferromagnetic material.

Note that the debris assembly 13 will tend to be denser opposite the entryway last used. For example, if the previous crash-load entered through the entryway 4, the resulting crashing would cause much debris to be moved towards the entryway 14. Hence, the center of mass of the debris assembly will be moved back and forth as there are alternate crash-loads of terrestrial and lunar materials.

If there are consecutive crash-loads entering through the same entryway, the debris could be moved towards the entryway by the selective use of the powerful electromagnets (not shown). Some of the pushers near the closed entryway could push their debris towards the center-line and then those powerful electromagnets towards the other end could attract ferromagnetic debris towards the entryway that will be opening. Such procedure would be used if this satellite 1 is used as a variable Earth orbiting satellite transport vehicle.

A reuseable crash-load launcher from Earth that almost places the adjusting rocket and crash-load into the desired trajectory could be used. In such a system adjusting rocket and crash-load containing shell could be about say 10% of the "crash-load" entering the satellite 1. Also, the practitioner might elect to use a less powerful launcher and have the adjusting rocket expend more fuel. In that system perhaps about 15% of the "crash-load" entering satellite 1 is of the larger adjusting rocket, empty fuel containers and of crash-load containing shell.

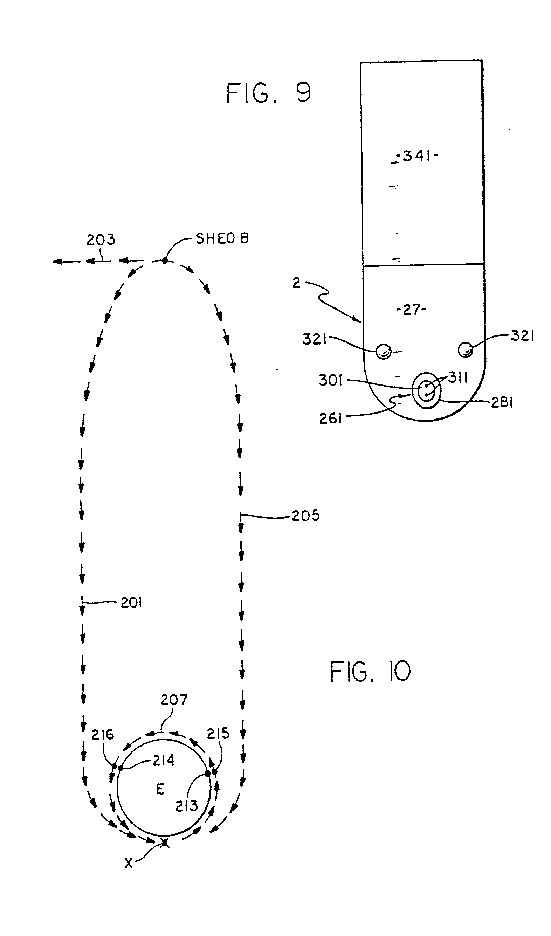

Fig. 9 the crash-load 2 which preferably enters the entryway 4 rear-first. The reason why this crash-load 2 enters the entryway 4 rear-first is because the spent rocket portion 341 and containing shell thereof is about 40% of the mass of the total mass of the "crash-load" which is about 200 kg. There are many possible systems of rockets that could be used. A typical system blasts off the surface of Earth with a gross mass of about 800 kg of which about 600 kg is rocket fuel. Entering rear-first, there is about 60 kg of spent rocket motors and fuel storage facilities 341 "in front" of the main crash-load much of which is of softer material.

Within the main crash-load, which mostly consists of very thick tar 27, is an ellipsoidal portion 261 which has a total mass of about 15 kg. When the rear-first crash-load strikes the debris assembly, the momentum of that ellipsoidal portion causes it to move forward through the thick tar as the crash-load proper is very quickly decelerated by collision with the debris assembly. Even though the debris assembly that is within a meter of the chamber's center-line has a mass on the order of a couple hundred tonnes, rough calculations indicate that over ten tonnes of debris will strike the doors 17 with an average velocity of about 200 meters per second.

All the crash-loads of this embodiment are designed to shatter as they strike a debris assembly but the ellipsoidal portion 261 retains its structural integrity. The ellipsoidal portion 261 has a thick shell 281 of chromium metal and a center portion 301 with a mass of about 6 kg of LiH. Note that the LiH is loosely packed with a plurality of voids 311 for the retention of hydrogen gas that might be produced by the shock of collisions and of heat produced therefrom. The reason for the ellipsoidal containing chromium, lithium, and hydrogen is because that it is unlikely that recoverable quantities of chromium or lithium will be found on the Moon, the moons of Mars, or on convenient asteroids.

Also shown are two spheroids of brass 321 each of which has a mass of about three kilograms. The brass could be mostly copper with both zinc and tin. When collected from the debris those spheroids could be processed for those three metals.

The rocker motor(s) and the fuel containment means 341 of the crash-load and rocket 2 are shown as a schematic box 341 as any appropriate rocket system could be used. It is very important that there be most precise rocket control means for it is desired that the final trajectory of the crash-load lie within a few centimeters of the center-line of the chamber 11. Note that the crash-load and rocket should have a disposable radio receiving means as well as rocket motor control means so that trajectory control can be provided first from the launch site and then from the satellite.

The design of the crash-load of lunar material is much simpler since there is no atmosphere to pass through. Also the control is less critical because of the much lower relative velocity and of the much longer time during which the crash-load travels from when the crash-load is launched to when it "crashes". That is more than 4 days compared to about 4 minutes. However, care should be taken so that the crash-load of lunar material is not made too strong or is shaped with "streamlining" else it could travel through the debris assembly and still have too much velocity· when it strikes the bumper doors 211. To avoid such possible damage to the chamber the crash-load and rocket should be designed to shatter upon striking the debris assembly.

The crash-load and rocket of lunar material which has a total mass upon entering the entryway 4 of about 460 kg and could be similar to the system shown in Fig. 6 where a reuseable adjuster that burns liquid fuels such as $N_2H_4$ with $N_2O_4$ and blasts quickly away from impact trajectory with satellite 1 just prior to when the crash-load 2 enters entryway 4. The adjuster continues on its most highly elliptical orbit and returns to a super high Earth orbiting base in several weeks.

The crash-load could be with a rocket adjusting means for the necessary trajectory which becomes scrap within the chamber 11. It is possible that the crash-load with a small rocket adjusting system attached that becomes debris in chamber 11 is directed into almost the precise trajectory by a reuseable launching means that quickly launches and then returns to the super high Earth orbiting base in about an hour.

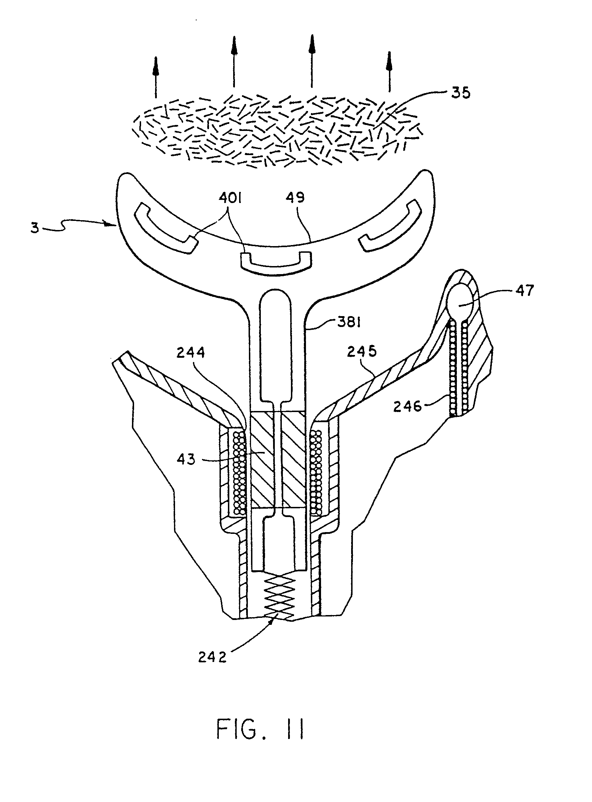

Fig. 11 shows a pusher 3 at its maximum extension and with debris 35 traveling toward chamber 11's center-line. The pusher 3 preferably has a maximum width of about 2 meters and is shaped somewhat like a modified hexagonal bird bath with a column-shaft 381 that has a diameter of about 50 cm.

The pusher 3 is designed to propel debris toward the centerline of the chamber at a selected time and has a spring system 242 attached to the end of columns shaft 381. Just before a cycle starts the pusher 3 is about a quarter-centimeter from wall 245 and the spring system 242 is latched and compressed. The spring system 242 is unlatched and the coils 244 are energized. The magnetic iron portion 43 of the mostly non-ferromagnetic shaft 381 is pulled upwardly and the debris 35 is pushed inwardly.

When the pusher 3 has its maximum inward velocity the local electromagnets 401 are turned off as the spring system 242 starts to decelerate the pusher 3; and the coils 244 are de-energized. Then the system 242 pulls the pusher 3 back to its starting and latched position.

A plurality of powerful electromagnets 47 having coils 246 are turned off all of the time except for a period about a few minutes after a crashing until the velocities of the particles of debris have been reduced to less than a centimeter per second by repeated collisions with each other and with the pushers and walls 12. Then for a period of a few minutes the powerful electromagnets 47 are selectively turned on full power so as to attract the ferromagnetic debris particles toward the pushers. The powerful electromagnets 47 give such particles velocities toward the chamber's sides and then when such powerful electromagnets are turned off, said particles are moving toward the powerful electromagnets 47 which are surrounded by pushers 3. Then the local electromagnets 401 are energized and most of those ferromagnetic debris particles are attracted to a location within a pusher 3. As such particles are moving toward the pushers, they collide with non-ferromagnetic particles which then also are somewhat directed toward such pushers 3 and are "collected" within such pushers by being "surrounded" by ferromagnetic material.

Probably a large fraction of non-ferromagnetic material will be a thick tar that has very high adhesive properties towards both such non-ferromagnetic materials as delinized lunar soil and towards ferromagnetic lin particles. Thus, there will be larger "particles" that are conglomerates of tar, lin, and non-ferromagnetic materials. Such larger "particles" will be attracted by the powerful electromagnets 47 and end up in the pushers 3. Note that the adhesive forces of the debris towards the surface 49 is less than the forces decelerating the pusher.

When the crash-load strikes the debris assembly much debris strike the different pushers with velocities upwards of a hundred meters per second. By being a quarter-centimeter from the wall 245, the pushers can "give" that quarter-centimeter before the pusher is "pushed" into the wall 245 by the momentum of that debris.

Most of the pusher 3 and the wall 245 are manufactured of non-ferromagnetic material which has great toughness. A non-ferromagnetic "stainless" steel would be a preferred material.

The operator of this embodiment should so program the pushers 3 so that there is a desired debris assembly along the center-line at the instant the crash-load enters the entryway. The powerful electromagnets 47 are so programmed that desired quantities of debris are in each pusher 3. Note that when the debris 35 is moving towards the center-line with a velocity of say a half-meter per second, it strikes mostly non-ferromagnetic particles that have velocities on the order of magnitude of a centimeter per second and hence most such particles will also be moved towards the centerline without much misdirection of the debris 35 itself.

With crash-loads of about 200 kg from Earth and of about 460 kg of lunar material, there could be on the order of 800 tonnes of debris within the chamber of which about 200 tonnes are located within a meter of the center-line at the instant of crashing. However, about 600 tonnes of debris are within 3 meters of the center-line. Because of the pushing of almost stationary debris towards the center-line, there could be as little as a hundred tonnes of debris "held" within pushers 3 just prior to the energizing of the coils 244 and still there could be the desired concentration of debris assembly along the center-line to interact with the crash-load.

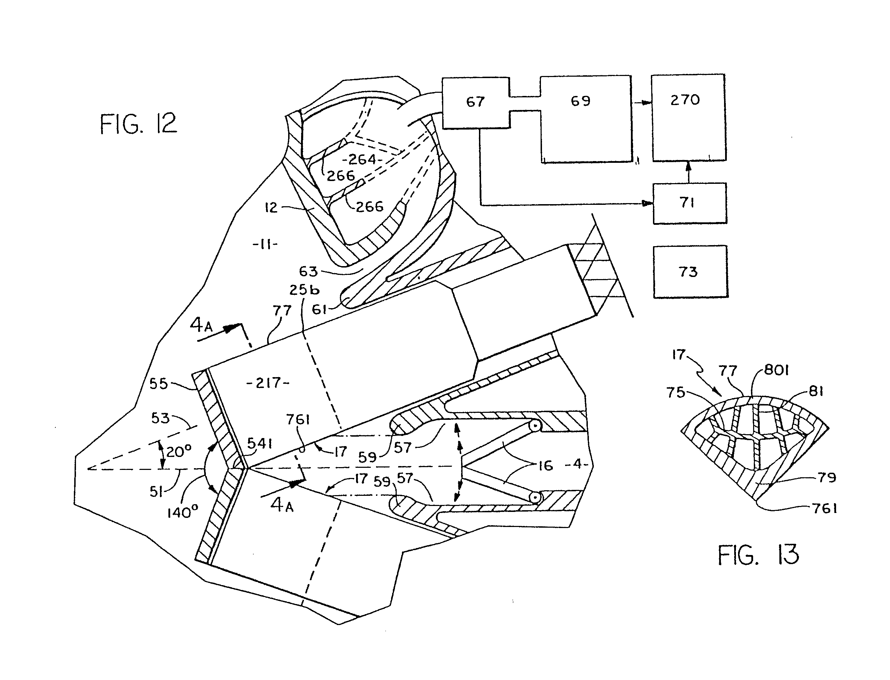

Fig. 12 shows in greater detail the end of the chamber 11 near the entryway 4, the inner portion of the entryway 4, as well as adjacent structures. The bumper-doors 17 are shown closed tight to absorb the momentum-shock of the mass of debris and crash-load remains that strike them. Rough calculations indicate that such momentum-shock consists of about a couple tonnes of matter with an average velocity of about 200 meters per second striking those bumper-doors within a period of about 0.005 second.

There are four bumper-doors 17 which are shown fitting together. The angle of the center-line 51 of the chamber 11 and the center-line 53 of the bumper-door preferably 17 is about 20°. Correspondingly, the angle of the inside surface of the bumper-doors 17 within the center-line 51 preferably is about 70°. There is a beveled surface 541 of the door 17 with a length of about a quarter-meter such that the beveled surfaces of each of the four doors 17 all fit together when the doors 17 are fully extended.

When the entryway 4 is open for crash-loads of lunar material, the front surface 55 of the doors 17 are pulled back a couple of meters to about the line 256. The doors 16 are within the recesses 57 between bumpers 59. When shut, the doors 16 are vapor tight and the door moving and sealing means are not shown for such art is well developed.

When the great mass of high velocity debris strikes the surfaces 55, the doors 17 generally will be moved backwards and some debris will travel outwardly and strike the inner entryway bumpers 59 and the doors 16 which are strong enough to remain vapor tight. There is also a bumper-wall 61 which is strong enough to withstand much high velocity debris and to direct much of such debris through opening-passageways 63 into collecting chambers 264. A plurality of struts 266 strengthen front protecting wall 12.

Attached to chamber 264 is schematically shown gathering means 67 which collects up debris and gases from chamber 264. One way the gathering means 67 functions is by maintaining an almost perfect vacuum within so that when it opens up into chamber 264, gases and/or vapors that are within the chamber 11 travel through opening-passageway 63 into chamber 264 and into gathering means 67. Entrapped within such gases and vapors will be much debris-dust. Within gathering means 67, solid particles are separated from the gases and vapors which are transferred to storage means 270. Likewise solid materials from gathering means 67 are transferred to solid processing means 71 wherein the different materials are separated from each other and then mostly transferred to storage means 270. Some of the lin which has been separated from other solid materials could be re-introduced into the chamber 11.

Means 67, 69, 270, 71, and power source and power distribution means 73 are located in various locations between the wall 12 and the outer wall 15 of the satellite 1.

The structure of the door 17 is shown generally in Fig. 13 and includes a great plurality of struts 75 within the large void within the door 17. A wall 79 of the door 17 near corner 761 is much thicker than wall 801 near the point 77 which is in the center of the outer curvature of the door 17. Between the wall 79 and wall 801 is a main strut 81.

It should be understood that satellite 1 has additional facilities, such as complex radar, control means, living quarters and work facilities, which are not shown in Fig. 8 or Fig. 12.

The quantity of vapors and gases produced with crashings within the chamber 11 depends upon the nature of the crash-loads and of the material within the debris assemblies. Means 67 and 69 are shown in Fig. 12 and smaller vapor and gas removing means 83 are shown positioned off entryways 4 and 14 (Fig. 8) for the capture of such gases and vapors that escape from chamber 11.

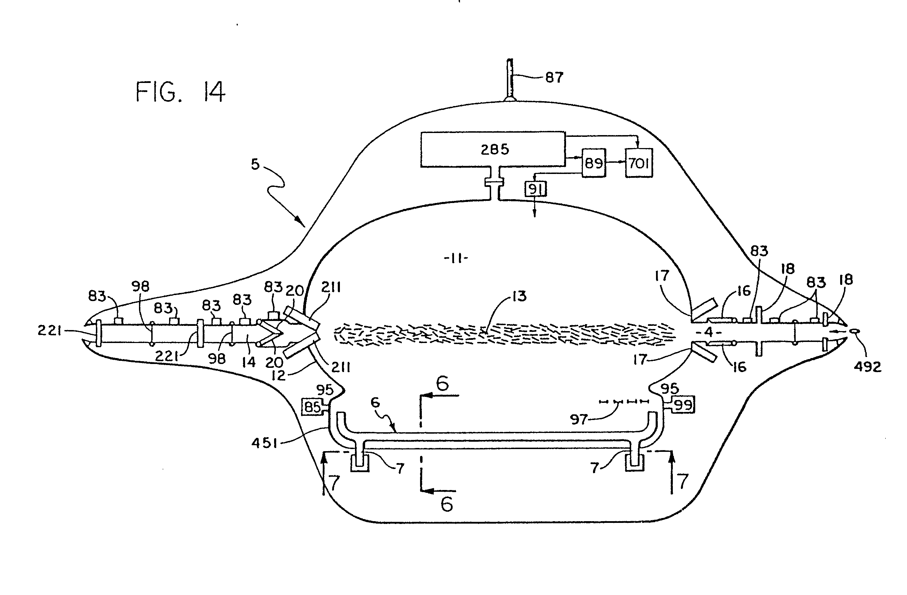

The third embodiment of this invention is shown in Fig. 14 and is designed to capture crash-cargoes from Earth that contain volatile materials and/or cold liquids or solids. Referring now to Fig. 14, a plurality of smaller vapor and gas removing means 83 are illustrated at to the entryways 4 and 14. Note that in Fig. 14 that for corresponding items the same numbers are used as in Fig. 8. For example, chamber 11, entryways 4 and 14, doors 16, 17, 20, and 211, and shutters 18 and 221.

The chamber 11 is somewhat elliptical within a major diameter of about 30 meters and a minor diameter of about 20 meters. Within this chamber 11, there is a net downward force of about 0.1 newtons per kilogram of mass (about a centigravity) due to the fact that the lower assemblage 5 is attached by a vertical tether 87 to an upper satellite portion 189 and is about 25 km below the system's center of gravity c (Fig. 7). A particle will "free fall" 20 meters in about 20 seconds and then have a downward velocity of about a meter per second. Thus, about half a minute after a crashing most of the debris will have settled into a large tub 6 which is located at the bottom of the chamber 11.

Some materials will have traveled with the gases and vapors produced upon crashing into a plurality of lower vapor and gas removing means 85 and upper vapor and gas removing means 285 which includes systems for gathering and processing gases and liquids. The materials entering into means 85 and 285 are gathered together and transferred to the material processing means 89 wherein and wherefrom selected materials are transferred to storage means 701 and to dropping means 91 wherefrom such solid material is dropped in such a programmed way that it is within the debris assembly 13 at the instant crash-loads are crashing.

Crash-load 492 is shown in Fig. 14 about to enter the entryway 4 and the shutters 18, and the doors 16 and 17 are shown open while the doors 20 and 211, and the shutters 221 at the opposite end of the chamber 11 are sealed shut. Also shown in entryway 4 is a temporary thin membrane-shutter 98 and two such shutters 98 are shown in entryway 14.

In order that most of the debris fall into the tub 6, the walls 12 of the chamber 11 are so shaped with a rim-ledge 95. For the capture of terrestrial ellipsoidals, there is located beneath the ledge 95 on the entryway 4 end of the chamber 11 an ellipsoidal catching means 99 which casts out an ellipsoidal catching net 97 about five seconds after terrestrial crash-load crashing. Means 99 will also process much debris which is not of ellipsoidal and in that function it will act somewhat like means 89.

In the practice of this third embodiment there is more mass of debris within the chamber 11 (upwards or two thousand tonnes) and the crash-loads are more than twice as massive. Likewise, there could be three ellipsoidals of about 40 kg each with a terrestrial crash-load. Such ellipsoidals might each contain as much s 20 kg of very compressed and dehydrated "food". Such "food' is at a crogenic temperature as is most of the crash-load which could be methane ice when the crashing occurs. Hence the food itself would not be excessively heated by the crashing.

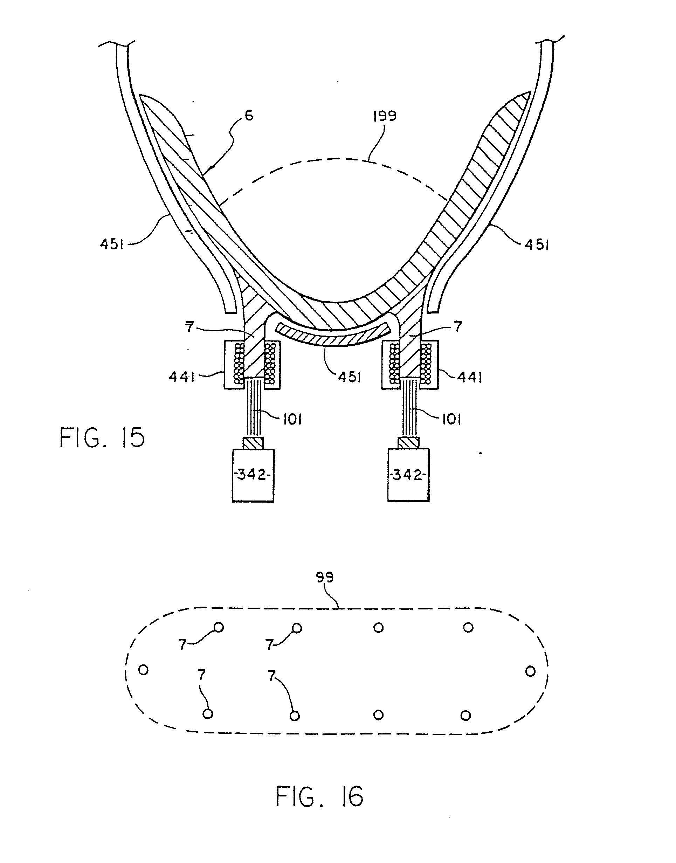

Fig. 15 shows the tub 6, wherein there is shown a dotted line 199 showing where the debris is generally positioned within tub 6 before the tub is accelerated upwardly. If the electro-magnetic system as illustrated in Fig. 15 is used for moving the tub 6, the walls 451, and the upper portion of the supports 7 should be non-ferromagnetic while the lower portion of the supports 7 shown as portion 101 should be ferromagnetic. Like the operation of the pushers 3, when the coils 441 are energized, the tub is moved upwardly. Also, to decelerate the upward moving tub 6, there are means 342 which cause the tub 6 to stop moving upwardly before it would hit the ledge 95 and cause it to be moved downwardly so that at the instant of crashing it is about a half-centimeter above the walls 451 into which it is designed to "fit".

Fig. 16 shows the location of the ten supports 7 which support and move the tub 6. A projection of the debris 13 when it rests within the tub is shown as a dotted line 199. These supports 7 must move in unison and with proper acceleration so that the debris assembly 13 is along the center-line of the chamber 11 when the crash-load arrives.

This third embodiment could be so modified by using a plurality of tubs and pushers without deviating from the broad inventive principles of this embodiment or of this invention. Likewise the debris assembly could consist of a slurry and/or there could be the use of electromagnets as disclosed in the second embodiment.

Fig. 7 shows a constellation of a low Earth orbiting system which consists of a lower facility 5 a vertical tether 87 of about 50 km length and an upper facility 189 which has a mass which is about equal to the mass of facility 5. A crash-load from Earth travels upwardly to a apogee at point X and is there at the instant the open end of facility 5 arrives at point X. Note that relative to Earth at that instant the velocity of the crash-load could be less than a meter per second while the velocity of facility 5 is over 7.4 km/s.

For the second embodiment there is no constellation and hence no net downward force within the satellite 1. The relative velocities are about the same as for the third embodiments. In Fig. 7 the facility 5 is shown with but a single passageway which could be the design of the facility 8 of the fourth embodiment of this invention. Note that the second and third embodiments could be practiced with a crash-load capturing facility which has but one passageway. To change from receiving crash-loads from Earth to capturing of prograde traveling crash-loads the facility 5 is rotated 180°.

If a vertical tether 87 is used and it is not desired to generate electricity therefrom there should be the use of material which forms a tether of very high electrical resistance. Alternate links of metal and insulating material would be satisfactory for such a tether-chain.

Fig. 10 is a drawing of the Earth E and a low Earth orbit 207 and a super high Earth orbiting base (SHEOB) all of which are in the plane of the Earth's equator. The SHEOB is traveling an orbit 203 with a period of many months. A cargo-load with adjusting means is given a launch from SHEOB which is chiefly the reduction from the velocity of orbit 203 to an orbit 201. The cargo-load is so programmed that it is at the perigee of orbit 201 and at point X when the receiving facility in orbit 207 is at that point X.

There could be terrestrial crash-loads from an equatorial Earth base 213 to a point 215 in orbit 207 or from 214 to 216, etc. Likewise there could be different orbits 201.

If a facility or constellation is to maintain a constant altitude about the Earth the vector sum of momenta of captured crash-loads should equal atmospheric drag.

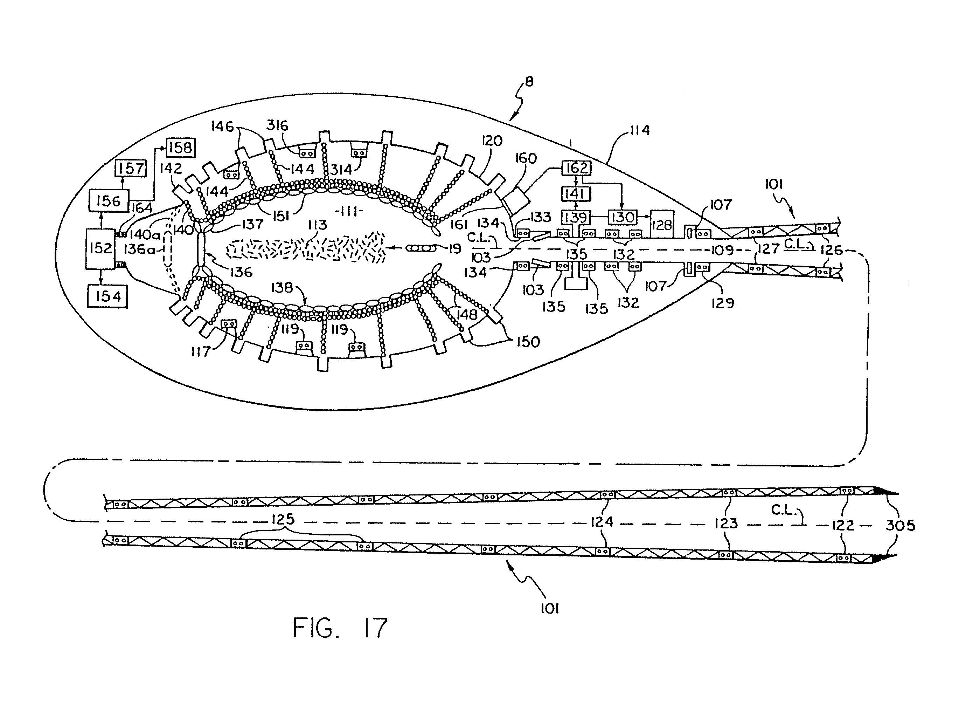

Fig. 17 shows the fourth embodiment of this invention which is of an orbital transport vehicle 8 wherein there is no net downward force therein and the debris assembly 113 contains much lin. A crash-load 19 is shown an instant before impact with debris assembly 113. The outer shutter 107 and the inner shutter-doors 103 are open. A greatly strengthened outer shell 114 and the sturdy bumpers 305 protect the OTV 8 from error in the crash-load's trajectory.

Before the crash-load 19 travels through the narrow entryway 109 of the OTV 8, it travels through a long and complex centering means 101 which consists of a plurality of coils and many struts.

At the far extremity of means 101 is a bumper means 305 which is designed to deflect any crash-load 19 that is traveling on a trajectory that is too far from the center-line C.L. of the means 101 that is an extension of the center-line C.L. of OTV 8. This bumper means is so designed that it partly crumbles and fragments in a manner such that no major pieces freely escape with high velocity into portions of the means 101.

With this type of design and construction there needs to be a major repair made when and if the bumpers 305 are struck by a crash-load. The reason for having replacement bumper portions quickly available and for being able to quickly complete needed repairs is that the long complex structure of struts and coils that comprise the means 101 does not have enough strength to withstand a direct blow by a whole crash-load.

With proper operation of this crashportation systems, the probability of an accident is so remote that it is more logical to replace a damaged bumper portion rather than make the whole complex structure and bumper massive enough so that it is strong enough to withstand a direct impact of a crash-load without damage.

In addition, there could be a rocket missile means (not shown) that would be fired to intercept and so fragmentize the errand crash-load such that no major damage occurs to the means 101 or to the body of the OTV 8.

The chamber 111 of the OTV 8 is somewhat ellipsoidal in shape with a major diameter (along the center-line C.L.) of about 14 meters and a minor diameter of about 7 meters. The crash-load 19 impacts into the debris assembly 113 which is formed along the center-line by magnetic forces produced when intense currents travel through the coils 314, 316, and 317. Coils 314 and 316 are on ribs 119 that hold and support them. Hence, the outer surface of those coils that faces the center-line C.L. are about half a meter closer to that center-line than are the chamber's strong and sturdy walls 120.

In front of and attached to the OTV 8 is the over a hundred meter long means 101 which is flimsy, fragile, and yet strong enough to support a plurality of centering coils. A couple of meters from the bumpers 305 is the outermost coil 122 which has an inside diameter of on the order of two meters. About four meters further inward is coil 123 with an inside diameter that is about seven centimeters less than the inside diameter of coil 122.

About 3.8 meters inward of coil 123 is coil 124 which has an inside diameter that is 6.5 cm less than the inside diameter of coil 123. Inward of coil 124 there is a plurality of coils 125 which become progressively closer to each other and each coil has a progressively slightly smaller inside diameters. For example, the innermost coil 127 of means 102, which has an inside diameter of 80 cm, is about 1.7 meters from its outsideward neighboring coil 126; which has an inside diameter of about 81 centimeters.

Not shown on means 101 are the electrical current transmission means, current switching means and the crash-load sensing means. The passage of a most intensive pulse of current through the coils at a programmed time causes the crash-load's center of gravity to be moved towards the center-line C.L. and also causes the center-line of the crash-load to tend to become parallel to the center-line C.L. If the crash-load has a relative velocity of about 3 km/second relative to the OTV 8, it travels about 60 cm in a fifth of a milli-second. Hence, the practitioner of this invention should design things so that the high voltages and currents that could be induced in nearby conductors or conducting materials do not cause damage.

The outermost coil 129 of the entryway 103 has an inside diameter of about 79 cm and is outside of the outer shutters 107. About half a meter inside of the shutters 107 is the injector means 128 which injects crash-assembly pieces into the entryway 103. Such pieces are spheroids with an inner core of about 3 cm diameter that is of lin or iron. Surround the inner core is a very thick shell with a thickness of about 5 cm and of aluminum alloy.

When the debris assembly is first assembled in the first OTV of this design, the initial debris assembly could consist of about sixty tonnes of such spheroids. It is possible by having currents through the coils 314, 316, 317 and 134 at different programmed times to cause the spheroids of the debris assembly to be slightly scattered away from the center-line and to be somewhat spread out from the center portion of the chamber 111.

After the debris assembly has impacted with crash-loads, there will be fragments of lin mixed with non-ferromagnetic lunar materials, etc. When a spheroids is struck by a crash-load with a relative velocity of about 3,100 meters per second, a portion of that spheroid will be melted. The melted aluminum alloy of that spheroid would most probably be splattered into small molten pieces by further impactations. Such molten pieces could then conglomerate with fragments of lin and non-ferromagnetic lunar materials.

If the mass of the crash-load of lunar materials is about 300 kg and no matter escapes or is withdrawn from the chamber 111 after about two hundred crash-load captures, the mass of "free" materials within the chamber 111 about doubles. Most of the fragments which are ferromagnetic will be within and about the debris assembly while most of the wholly non-ferromagnetic particles will mostly tend to be very weakly adhering to the walls 120.

After several hundred crash-load captures, the withdrawal of materials from the chamber 111 should begin because it is desired that the items making up the debris assembly be mostly of non-ferromagnetic matter but yet contain enough ferromagnetic matter that each item be moveable by magnetic forces. That is the operation of this embodiment should be such that the whole debris assembly does not magnetically adhere to itself. For example, when intense currents are programmed only through the coil 134, which is located about the innermost portion of entryway 103, it is desired that the debris assembly does not move as a solid-like mass toward the coil 134. If the debris assembly is mostly of ferromagnetic materials, then the whole assembly would move as a solid-like mass toward the coil 134 because in such a magnetic field each item itself becomes a separate magnet and hence all such items attach themselves to neighboring items.

Hence, it is desired to separate out from the debris assembly those fragments which are of mostly ferromagnetic materials. That could be done by having a most intensive current only in coil 134 and a many of the fragments which are mostly of ferromagnetic material are moving to the outer central portion of the chamber 111. Thus, fragments which are of mostly ferromagnetic material will be moving into the outermost portion of chamber 111. Then the current through coil 134 is turned off and intense currents are programmed through the coils 135 which are located about entryway 103 and about 3 and 5 meters outward of coil 134. Hence, those fragments, which are more ferromagnetic, are moved selectively to locations along the center-line C.L. that are between the coils 135.

When the currents are turned off in coils 135, such fragments are captured by the ferromagnetic capturing means 139 and withdrawn from the entryway 103. Means 139 includes at least one powerful electromagnet and from means 139 such captured ferromagnetic material is transferred either to the material storage means 141 or to the spheroid production means 130. .

By turning coils on and off, it is possible in the gravityless environment to cause the debris to be formed into a desired debris assembly.

Additional spheroids for the debris assembly, which are produced in the means 130 are injected into the entryway 103 by the injector 128. By programming the currents through the coils 132, 135 and 134 it is possible to have the spheroids enter the chamber 111 with a velocity of about one meter per second.

A plurality of deflecting electromagnets 133 could be so programmed that the spheroids miss the outer end of the debris assembly and travel towards the inner end and a side of the chain-sleeve 138. If spheroids strike the debris assembly, there is a resulting dispersion of some of the spheroids, particles, and fragments forming the outer end of the debris assembly.

By the programmed use of currents through the coils 134, 314, 316, and 317; and by the use of impacting spheroids, it is possible to form the debris assembly into a desired configuration at the instant of crash-load impactation. Thusly when currents travel through the coils 314 and 316, which are about two meters apart, the debris assembly forms along the center-line C.L. with the greater concentration of material having a length of about six and half meters and an average thickness of about a meter and a quarter. Another coil 317 is about two and half meters further inward from coil 316 and current through coil 317 causes some of the debris assembly to extend to about half a meter from the shield 136.

The shield 136 is a solid shield, somewhat roundly shaped and slightly concave towards the chamber's center, with a maximum thickness, that is through its center, of about 0.4 meters and an average radius of about 0.8 meters. Since the shield 136 is constructed of purified lin, it has the properties of good armor-plate and is most ferromagnetic. Hence, when the currents travel through the coils 314, 316, and/or 317, the shield is pulled by magnetic forces towards the debris assembly. There are a great plurality of chains attached to shield 136 (only four are shown) by very strong links. For example, the links 137 attached to the shield are longer than half a meter and have a mass in excess of 100 kg.

There are six chains 140 attached to shield 136 which are pulled taught so that the shield does not move too close to the debris assembly when currents travel through coils 314, 316 and/or 317.

About a quarter second before the crash-load impactation the chains 140 and other chains are released by such chain control means as means 142 and hence additional links could be impactation-pulled into the chamber. Thusly the length of the chains 140 is increased about a half meter before the debris avalanche causes movement of shield 136 to a location shown as 136A where the chains 140 are again taught, as shown as 140A.

Since the shield is attached by a plurality of strong chains to the chain-sleeve 138, the whole chain-sleeve system is pulled towards the closed end of the chamber. Also, some debris strikes inner chain links such as link 137 and that adds to the forces moving the whole shield and chain-sleeve system. In addition, chains 144 which are attached to chain control means 146, chains 148 that are attached to chain control means 150, etc., are released just prior to impactation and then made taught.

After the effects of the impactation have subsided, the shield and chain sleeve system is moved back into somewhat its prior location by being pulled by the great plurality of chains, such as chains 148, and by the passage of currents through the coils 134, 314, 316, and 317.

The innermost links of the chain-sleeve, such as links 151, are almost as strong and massive as links 137. Such links are about 10% iron and such iron is located in a plurality of centroidal portions of the links. Also the iron is all in the inside portions of the links such that at least 3 cm of aluminum alloy is between it and any outer surface. None of the middle and outer links of the chain-sleeve contain any ferromagnetic material for they are all constructed of aluminum alloy.

However, the inner links with their 10% iron content cause the whole chain-sleeve system to be moved towards the center-line C.L. and also cause the chain sleeve system to become slightly compressed towards the chamber's center. But the plurality of chains 144 are made taught and prevent the whole chain-sleeve system from collapsing towards the center-line.

To each link of the chain-sleeve system, three or four links are attached and the resulting mass of the chain-sleeve system is on the order of a couple hundred tonnes. Most of the material of the chains of the chain-sleeve and of the other chains is of aluminum alloy which could come from scrap shuttle fuel tanks, expended rockets, etc.

Not shown in Fig. 17 are the many other systems needed to make the OTV operational such as radar and communication systems, living quarters, and storage volumes or cargo tie-on systems for the great volumes and masses of cargoes carried and for the crash-load materials accumulated.

If there are any gases or vapors produced within the chamber 111 such are withdrawn by the matter withdrawal means 152 which also includes powerful electromagnet means. Such withdrawn materials are then processed in either the gas processing and storage means 154 or in the material processing means 156 from whence such material is sent to the ferromagnetic material storage facility 157 or to the non-ferromagnetic material storage facility 158.

It is expected that this OTV will mostly be used for the transport of materials and supplies from low Earth orbit to higher Earth orbiting space stations or to much higher Earth orbiting space stations (such as geostationary), in such trips the total cargoes could be ten to twenty times the mass of the OTV 8 itself. To return to lower Earth orbit from much higher Earth orbits, the OTV could capture retrograde crash-loads of lunar materials that have but a fraction of the mass of prograde crash-loads.

Such retrograde crash-loads will have relative velocities that are three to six times the relative velocities that prograde crash-loads have. Hence with such retrograde crash-load captures, there needs to be more powerful centering means and there will be some vaporization of materials from the crashload and debris assembly. However, it is expected that most such vapor will quickly condense upon nearby particles and result in different aggregated particles.

From higher low Earth orbits, such as 1,400 km altitude, to a lower low Earth orbit, some 1,100 km lower, there could be the capture of crash-loads from the Earth. If the practitioner desires to have such crash-loads contain much plastic or hydrocarbon material then there would need to be a more complex and larger means 154.

If this OTV does not receive crash-loads that decompose into much vapor or gas, there will be the need to have a collecting-cleaning means 160 which has a hatch 161 through which personnel and/or robotized equipment collects materials from the walls 120 which are then processed in processing means 162. Separated materials from means 162 can be transferred to spheroid manufacturing facility 130 or to a material storage facility 141.

Also through the hatch 161 personnel and/or robotized equipment can enter the chamber 111 to repair chain links, to add additional links or chains, to remove items, make adjustments, etc.

Fig. 18 shows a vertical cross-section along the center-line of the crash-load 19 which is largely schematic and is of lunar material to be captured by OTV 8. With a length of about 3 meters and a maximum diameter of about half a meter crash-load 19 has a mass of about 300 kg. Depending upon the desired materials available from lunar soil the crash-load 19 is constructed of such material and lin in a manner that its center-line becomes parallel to the center-line C.L. of the center-line coils and that its center-line is moved ever closer to the center-line C.L. by the centering forces of the magnetic coils. Also the crash-load 19 is so constructed that it most readily fragments into a great plurality of pieces many of which tend to move away from center-line C.L.

The bowl-shaped front 168, the ring-shaped hollow 170, and the bowl-shaped rear 172 are such that the fore-mass 174 so fragments. The fore-mass 174 is connected to a like shaped middle-mass 176 by three shafts 175. The middle-mass 176 is connected by similar shafts 175, which are rotated about 60° about the crash-load's center-line, to a back-mass 178 that also has a similar shape.

The back-mass 178 is connected by four shafts 179 to the rear-most mass 180 which has somewhat a half-ellipsoidal shape that has been cut along its major axis. The crash-load 19 is strong enough so that it can withstand the forces of acceleration needed to propel it into the desired trajectory but yet so weak that it readily fragmentizes upon impactation. It is so designed that the fore-mass 178 fragmentizes about a tenth of a second before the middle-mass 176 fragmentizes. Likewise, the back-mass 178 fragmentizes about a tenth of a second after the middle-mass 176 and almost a millisecond before the rear-most mass 180 fragmentizes. Thus, there is a period of about three tenths of a millisecond during which the crash-load fragmentizes and transfers most of its momentum to the debris assembly 113.

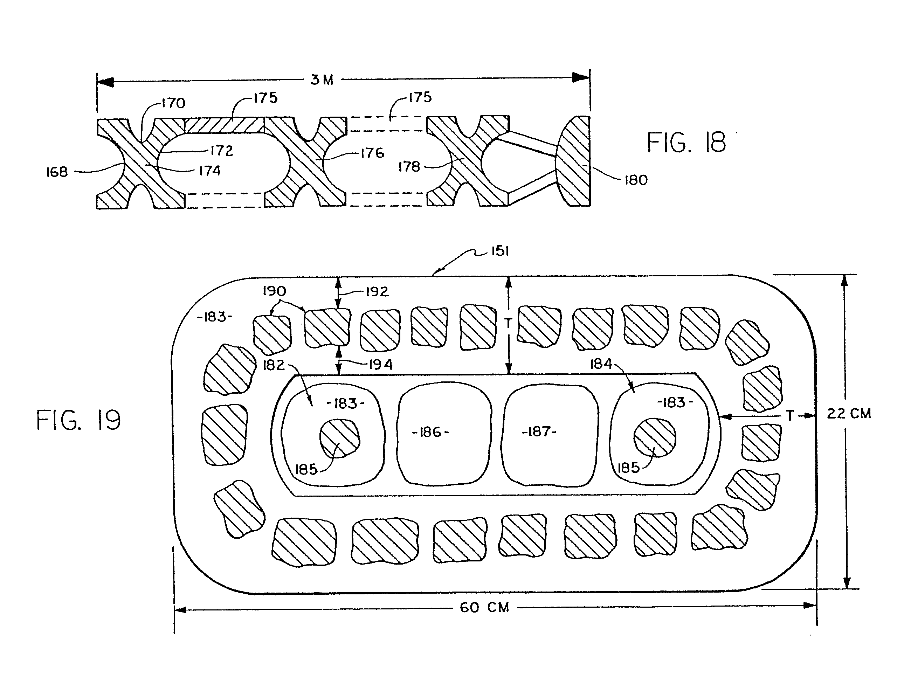

Fig. 19 shows a vertical cross-section, somewhat schematic, of chain link 151 which is an inside link in the chain-sleeve 138 shown in Fig. 17. Link 151 has a maximum length of about 60 cm, a maximum width of about 22 cm, and a maximum thickness of about 10 cm. The maximum thickness T of a portion of a link 151 is about 9 cm.

Link 151 is attached to links 182, 184, 186, and 187 cross-sections of which are shown. Links 182 and 184 are like link 151 and are inside links that are positioned longitudinally in the inside layer of the chain-sleeve 138. They both have cores 185 of ferromagnetic material. Also like link 151, most of the solid volume of the links 182 and 184 are of aluminum alloy 183.

All of links 186 and 187 are of aluminum alloy and they have a different shape than links 151, 182, and 184, since link 186 is connected to an adjacent link of link 151, said adjacent link is similar to link 151 and also to a link in the middle layer of chain-sleeve 138. Similarly, link 187 is connected to another adjacent link and another link in the middle layer.

Links 151 have a great plurality of portions 190 which like the cores 185 are of ferromagnetic material. Each portion 190 has a maximum linear dimension which does not exceed 6 cm and is never closer than one centimeter to an adjacent portion 190. Also the distance of a portion 190 to the outside surface, as shown by distance 192, is never less than 3 cm, while the distance of a portion 190 to an inside surface, as shown by distance 194, is never less than 2 cm.

There are links in the chain-sleeve 138 that have still different shapes and dimensions than the links 151, 182, 184, 186, or 187. And there is a great flexibility of design possible for a successful chain-sleeve. Having some three layers of chains which are connected to each other by links like links 186 and 187 could be used in this chain-sleeve 138 for use in chamber 111 of OTV 8.

The inventive innovations of crash-load centering by magnetic forces, by forming and positioning debris assemblies by magnetic forces, of the very large chain-sleeve, and of the massive shield with chains of this fourth embodiment could be used in different crash-load capturing satellites or in combinations of such systems other than the specific system as disclosed herein as OTV 8.

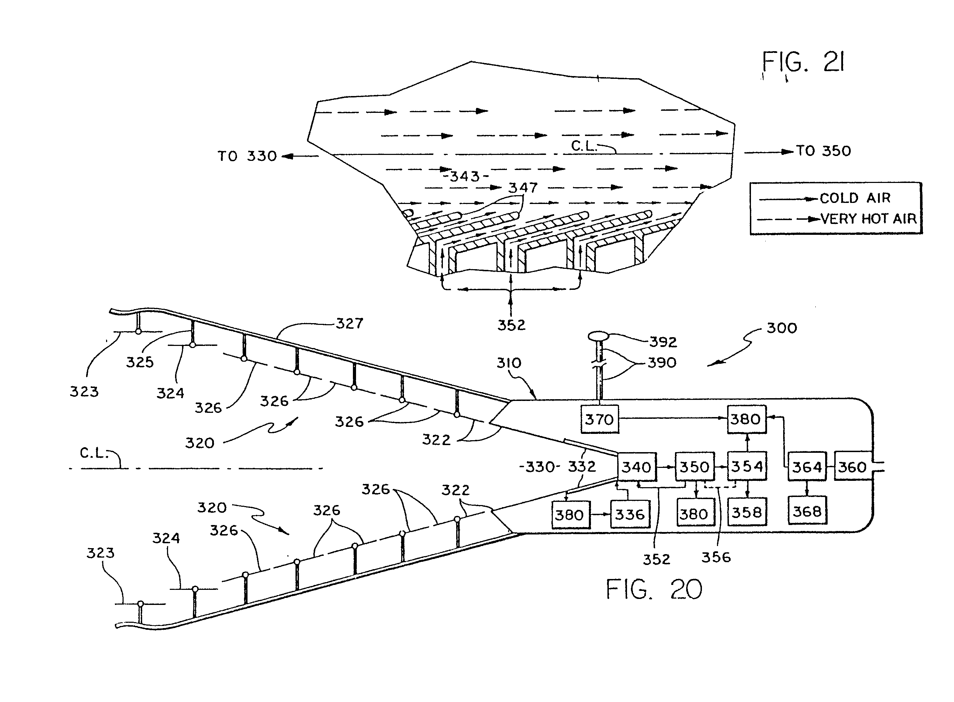

Fig. 20 shows a drawing which is mostly schematic of a cross-sectional view of the fifth embodiment of this invention which is of a very low Earth orbiting satellite system 300 that is both an atmospheric scoop of the uppermost atmosphere and a crash-load receiving-capturing facility. In addition this system generates electricity through a vertical tether 390 that has very low electrical resistance.

The lower facility 310 consists of a very large scoop 320, a crash-load capturing chamber 360 and many other means. The walls 322 of the scoop 320 converge into the gas collecting means 340 and the outer portions of the walls 322 consist of a great plurality of shutter-portions which can be opened or shut to form a somewhat smooth wall. Shutter-portions 323 and 324 are shown open to a horizontal position while the shutter-portions 326 are shown forming a somewhat smooth wall.

When the shutter-portions are all positioned into somewhat smooth converging walls the scoop 320 gathers up gases at its maximum rate and also has maximum drag. If there is too much drag the system 300 will descend quickly to a lower altitude and into a denser atmosphere. Hence there would be still greater drag and the system 300 would soon be destroyed in the lower atmosphere.

It is desired in the practice of this embodiment that the drag of the scoop and the velocity retardation caused by the tether generation of electricity be balanced out by the capture of prograde traveling crash-loads which have a trip from launching to impactation of many days. Certain solar activity can cause an increase in the density of the uppermost atmosphere in a fraction of an hour. Hence by quickly changing the positions of the shutter-portions the drag and altitude of the system can be kept somewhat constant.

By controlling the shutter-portions 323 and/or 324 it is possible to keep the system 300 and especially the chamber's 390's opening properly aligned. The plurality of shutter-portions 323, 324, and 326 are not just in the upper and bottom portions of the scoop but are also along the sides. The couple means for causing opening and closing such shutter-portions are not shown. When in horizontal position the edge of the shutter-portion, the shutter-portion supports 325, the scoop ribs (not shown), and the lateral supports 327 produce about 5% as much drag as when the shutter-portion is in a vertical position. The bottom shutter-portions can be oriented to cause an upward lift and the upper shutter-portions could cause drag and a downward force.

By controlling the shutter portions and the rate of electrical power generated the system 300 can be maintained at the desired altitude and attitude with fixed programmed crash-loads. There could be rocket systems (not shown) which could provide necessary thrusts to overcome failures in crash-load capturing etc.

Most of the molecules of gas which strike the scoop 300 have a horizontal velocity component between 6 and 9 km/s and vertical and sideways components of less than 2 km/s. Hence the molecules which strike the walls 322 tend to reflect inwardly and towards the scoop's centerline. Such reflected molecules then collide with other molecules which have high horizontal (inward) velocity component.

Hence there is a higher density of gases in the inner portion 330 and a "temperature" thereabouts of several thousand degrees Kelvin. The narrowing walls 332 are somewhat protected from the effects of such high temperature by having a cool molten fluid such as molten NaK circulate through very small tubes therein which are pumped by means 336 and such unwanted heat so gathered up is radiated out there from by a means 380.

The hot and compressed gases in the innermost end of portion 330 enter into gas collecting means 340 wherein there is a furthering narrowing chamber 343, a portion of which is shown in Fig. 21. Most of inside and outside surfaces of the walls 347 of the chamber 343 are cooled by a flow of air which has a temperature of about a hundred degrees Kelvin. Such very cold air not only protects the walls 347 but also causes a great reduction in the average temperature of the gases within the innermost portion of the chamber 343, and a great increase in their mass density.

This greater mass of cooler gas is pushed by on-coming gases through the narrow end of chamber 343 into the means 350 which consumes a great quantity of electricity operating compressors and pumps further cooling such gases. Much unwanted heat is disposed of through a heat radiating means 380. About 70% or 80% of the very cooled gases from means 350 are recycled by pumping and transporting means 352 into chamber 343.

The balance of the cooled gases exported from means 350 are transported to means 354 where they are liquified and separated out into liquid oxygen, nitrogen, etc. which are stored in storing means 358. Some nitrogen from means 354 could be fed back to means 350 and/or means 352 by means 356. Argon therefrom could be used in the means 392. Also separated out is dust, most of which is from abrazed wall 322. Means 354 also consumes much electrical power and exports much waste heat to a means 380.

The chamber 360 is shown in the upper rear portion of facility 310 and could be so located that it is along a horizontal line which intersects the system 300's center of gravity. Hence the chamber has nil downward and/or upward "gravity" forces therein and a system like the second and/or fourth embodiment could be used. Means 364 is the total combination of processing means for the crash-load debris, assembly fabrications, etc. Materials separated out are shipped to and stored in storage means 368. Waste heat from chamber 360 and means 364 are transported to a means 380.

The great quantity of electrical power needed for the operation of the facility 310 is gathered by the long tether 390 and such very high voltage D.C. is converted into desired types of electrical power by the means 370. Waste heat from means 370 and from the very many electrical connections thereabout (which are not shown) are transported to a means 380 to be radiated out.

The tether 390, of purified aluminum metal, has a length of about 5 km with a cross-sectional area of several square centimeters and a shape of an ellipse whose major axis is parallel to the path of the center-line of the scoop 320. At the top end of tether 390 is means 392 which could include a hollow cathode plasma emitter which consumes argon. The tether 390's surface could be covered with an electrical insulating coating of teflon of about half a millimeter thickness.

There are many items, such as food, equipment, supplies, etc., that can withstand decelerations on the order of a thousand times gravity and could be much more cheaply transported from Earth to low Earth orbit by the practice of this invention rather than by some soft docking method. However, if it is desired to have a long decelerating chamber in a satellite in low Earth orbit and the packaged-cargoes come straight upward with no horizontal velocity the total length of the facility needs to be nearly 3 km.

It takes only one-fourth the energy to obtain a velocity that is equal to one-half the orbital velocity and for capturing packaged-loads with a relative velocity of say 3,700 meters per second the facility needs to have less than 800 meters of length. For such a system the delivery means could include air breathing ram-jets and/or scramjets that are reuseable.

Such a long chamber satellite-facility could be built in low Earth orbit using concepts disclosed in the five embodiments of this disclosure. Also a long chamber facility would be built on the Moon which uses mostly "soft" dust for the decelerating debris assemblies. Such dust could consist of powdered plastic, graphite, aluminum, alkali metal oxides, etc. Tubs and pushers could be used in conjunction with dropping means to place the dust assembly in the desired configuration, etc. If needed, disposable shutters could be used upon the Moon. Likewise a facility for receiving crash-loads of volatile and/or cryogenic cargo could be constructed on the Moon.

It is not necessary that this invention only be practiced in the plane of the Earth's equator. There are a great plurality of possible orbital systems that could be used for the practice of this invention, etc. A satellite in low Earth orbit could have a plurality of facilities attached thereto. For example, a chamber for capturing crash-loads of mostly solid or liquid hydrogen from Earth, a long chamber for capturing packaged-loads from Earth, and a different large chamber for receiving crash-loads of extraterrestrial materials, etc.

It is possible that packaged loads from Earth or of extraterrestrial materials that contain cryogenic colatile substances could be successfully transported through a deceleration chamber without the packaged cargo leaking out.

It is readily apparent from the foregoing specification that modifications may be made to the extraterrestrial transportation systems and methods disclosed therein without departing from the invention as claimed.

**Claims**

1. A method of transporting a cargo of more than 10 kg from a transmitting location to an extraterrestrial receiving location, said method comprising the steps of:

propelling said cargo from said transmitting location along a path toward said receiving location such that said cargo upon entering into said receiving location has a relative velocity with respect to said receiving location that is in excess of 1,600 meters per second;

providing a receiving facility at said receiving location that has an opening aligned with at least a portion of said path and providing access to an impact chamber that has a volume of at least ten cubic meters;

introducing materials into said impact chamber for interacting with said cargo such that the relative velocity of said cargo with respect to said chamber is reduced to zero without significant damage to said chamber, said materials consisting of a plurality of solid pieces and/or of liquid such that the total mass of said materials is greater than a hundred times the mass of said cargo and said materials are positioned in the path of said cargo when said cargo enters said impact chamber; and

removing said cargo from said impact chamber.

2. The method of Claim 1 wherein said cargo becomes fragmentized upon impact with said materials in said impact chamber, including the step of separating said cargo fragments from said impact chamber and the impact chamber materials, said cargo fragments including liquids, solids, vapors and gases, some of which become physically and/or chemically associated with said impact chamber materials.

3. The method of Claim 1 wherein said cargo or a portion of said cargo is so packaged that it is able to change from a relative velocity that ·exceeds 1,600 meters per second to a relative velocity of zero in said impact chamber without any appreciable damage to said cargo or to a portion of said cargo.

4. The method of claim 1 wherein said receiving facility is located upon a man-made satellite that is orbiting the Earth and maintains a substantially

**0 158 821**

constant circular orbit about the Earth by receiving, at different times, cargo from the Earth whose relative velocity to the Earth's center is much less than the relative velocity of said satellite and cargo of mostly extraterrestrial material whose path is in high elliptical orbit about the Earth and whose velocity relative to the center of the Earth is much greater than said satellite.

5. The method of Claim 4 further including scooping up gases from the uppermost atmosphere by the use of a very large scoop, the drag produced by said scoop being offset by receiving cargo seriatim of mostly extraterrestrial material whose path is in a prograde highly elliptical orbit about the Earth.

6. The method of Claim 5 wherein said step of scooping up gases by the use of a very large scoop includes the steps of cooling said gas and re-introducing a majority of such cooled gas back into inner and narrow portions of said scoop in such a way as to reduce damage to said scoop, to increase the mass density of such gases in said narrow portions, and to cool those gases in the inner portions of said scoop.

7. The method of Claim 1 wherein said receiving facility is located upon a man-made satellite that is in a low Earth orbit and further includes the step of obtaining electricity by the use of an electrically conductive substantially vertical tether attached to said satellite.

8. The method of Claim 1, wherein said receiving station located upon a man-made satellite that orbits the Earth and includes the step of transporting much cargo from one orbit to another orbit, said step comprising the steps of:

attaching cargo to and/or within said satellite;

receiving at said satellite's receiving station cargo seriatim of mostly extraterrestrial material whose path is in a prograde highly elliptical orbit about the Earth, the receipt of many such cargoes causing said satellite to move from a low Earth orbit to a higher Earth orbit;

releasing from said satellite said cargo in said higher Earth orbit;

said satellite may, with or without different cargo within and/or attached, move to a lower Earth orbit by receiving cargo seriatim whose path is a retrograde highly elliptical orbit about the Earth and/or said receiving station receive cargo seriatim from the Earth whose relative velocity to the Earth's center is much less than the relative velocity of said satellite.

9. An extraterrestrial facility for receiving high velocity cargo and for reducing the relative velocity of said cargo to zero without significant damage to said facility, said facility comprising:

a large impact chamber with a volume in excess of ten cubic meters having an opening for receiving said cargo;

unattached materials within said chamber for interacting with said cargo such that damage to said walls of said chamber is prevented and that the cargo's relative velocity is reduced to zero;

means for positioning said unattached materials within said chamber such that said materials are in desired locations within said chamber at the instant said cargo enters said chamber;

means for withdrawing said cargo from said chamber.

10. The facility of Claim 9 wherein said facility is constructed on a man-made satellite which orbits the Earth and said satellite contains or is attached to at least one of the following:

a long vertical tether of conducting material by which said satellite obtains electricity;

a long vertical tether of non-conducting material which is attached on its other end to at least one different facility such that there is a pseudo-gravitational force within said satellite's receiving chamber;

more than one extraterrestrial facility for receiving high velocity cargo and for reducing the relative velocity of said cargo to zero without significant damage to any facility;

means for manufacturing of solid items for use as said unattached materials within said impact chamber, such solid items have some ferromagnetic material surrounded by non-ferromagnetic metal such as aluminum alloy;

means for introducing said unattached materials into said impact chamber;

a plurality of large diameter coils which are normal to said cargo's path which goes through said coils, programmed currents through said coils produce magnetic fields such that said cargo, at least part of which is ferromagnetic, is directed into a path nearer the desired path;

a plurality of large diameter coils surround the center and main portions of said impact chamber and programmed currents through said coils produce magnetic forces that cause the desired positioning of said materials and other things within said chamber, which are ferromagnetic, or can cause the movement of such materials and/or cargo out of said chamber;

a large scoop which has a plurality of shutter portions that are able to cause said scoop to vary the amount of drag and to cause said scoop to maintain proper alignment, attitude, and altitude, said scoop gathers in gases from the uppermost atmosphere;

at least one disposable shutter in combination with at least one reuseable shutter for said opening through which said cargo travels;

another opening to said impact chamber which is located at the other end of said impact chamber, at different times cargo passes through such openings, when one opening is open for the passage of cargo the other opening is shut;

means for quickly withdrawing gases and vapors from said impact chamber, said gases and vapors could be of cargo or of decomposed unattached materials;

means for the withdrawal of thermal energy from cargo and unattached materials within said impact chamber;

a plurality of chains within said chamber which are attached to some other chains, some of said chains are attached to parts of the facility that are not inside said chamber, some of said chains are attached to a massive shield, said chains and shield form a means that somewhat attenuates the velocities of the cargo and impacted unattached materials and somewhat protect said chamber's walls from damage;

a plurality of backward moving and shock-absorbing bumper-doors which absorb the momentum of some of said unattached materials and said cargo such that there is insignificant damage to said facility and which help to reduce the relative velocity of said cargo to zero;

a second pluralities of said bumper-doors which is located at the opposite smaller end of said impact chamber, when one of said bumper-doors is open an other of said bumper-doors is closed.

11. The facility of Claim 8 wherein said facility is constructed upon the Moon and said facility contains at least one of the following;

means for introducing said unattached materials into said chamber;

means for withdrawing said unattached materials from said chamber;

means for processing, purifying, preparing, and/or transporting said unattached materials from locations within said facility but outside of said chamber to different locations within said facility;

means for dropping said unattached materials, if said unattached materials include liquids said dropping means includes means for forming and dropping globs of said liquids and/or means for the forming and introducing of sprays into said chamber;

means for sealing off said chamber from the opening said means includes the means for quickly opening and closing;

at least one disposable shutter in combination with at least one reuseable shutter for said opening through which said cargo travels, said disposable shutter comprising a thin membrane of strong material for containing gases with a vapor pressure of a couple millimeters of pressure and rupturing upon impact with a cargo, the disposable shutter retaining most of its structural integrity except in the area through which said cargo travels;

means for pushing said unattached materials from locations within said chamber that are along the side and/or bottom walls of said chamber of desired locations that are closer to the center-line of said chamber;

a plurality of large diameter coil which are normal to said cargo's path which goes through said coils, programmed currents through said coils produce magnetic fields such that said cargo, at least part of which is ferromagnetic, is directed into a path nearer to the desired path, said coils are outside of and/or about said chamber;

means for quickly withdrawing gases and vapors from said impact chamber, said gases and vapors could be cargo or of decomposed unattached materials;

means of withdrawing thermal energy from cargo and unattached materials within said chamber;

a plurality of chains within said chamber which are attached to some other chains, some of said chains are attached to parts of the facility that are not inside said chamber, some of said chains are attached to a massive shield, said chains and shield form a means that somewhat attenuates the velocities of the cargo and impacted unattached materials and somewhat protect said chamber's walls from damage;

a net means for separating out larger falling cargo from smaller unattached materials and/or liquid unattached materials;

at least one additional chamber which has openings at both ends, said openings are sealed shut except for passage of cargo therethrough, unattached materials within said additional chamber can be different than those of other additional chamber and/or of said impact chamber.

**Patentansprüche**

1. Verfahren zum Transport einer Fracht von mehr als 10 kg von einem Sendeort zu einem außerirdischen Empfangsort, mit folgenden Schritten;

Die Fracht wird von dem Sendeort auf einer Bahn derart zu dem Empfangsort vorgetrieben, daß die Fracht beim Eintritt in den Empfangsort relativ zu diesem eine Geschwindigkeit von mehr als 1600 m/s hat;

an dem Empfangsort wird eine Empfangseinrichtung vorgesehen, die eine mit mindestens einem Teil der genannten Bahn fluchtende Öffnung hat, die einen Zugang zu einer Prallkammer mit einem Volumen von mindestens 10 m³ ermöglicht;

in die Prallkammer werden Materialien eingebracht, die geeignet sind, mit der Fracht derart zusammenzuwirken, daß die Relativgeschwindigkeit der Fracht gegenüber der genannten Kammer auf Null verringert wird, ohne daß die Kammer beträchtlich geschädigt wird, wobei die genannten Materialien aus einer Mehrzahl von festen Stücken und/oder aus Flüssigkeit besteht, die Gesamtmasse der genannten Materialien mehr als das Hundertfache der Masse der genannten Fracht beträgt, und die genannten Materialien auf der Bahn der Fracht angeordnet sind, wenn diese in die Prallkammer eintritt; und

die Fracht wird aus der Prallkammer herausgenommen.

2. Verfahren nach Anspruch 1, dadurch gekennzeichnet, daß die Fracht beim Aufprall auf die genannten Materialien in der Prallkammer in Teile zerfällt und diese Teile der Fracht von der Prallkammer und den Prallkammermaterialien getrennt werden, wobei die Teile der Fracht Flüssigkeiten, Feststoffe, Dämpfe und Gase umfassen, von denen einige den Prallkammermaterialien physikalisch und/oder chemisch zugeordnet werden.

3. Verfahren nach Anspruch 1, dadurch gekennzeichnet, daß die genannte Fracht oder ein Teil derselben so verpackt ist, daß bei einer Verminderung der Relativgeschwindigkeit von über 1600 m/s auf Null in der Prallkammer die Fracht oder ein Teil der Fracht nicht merklich geschädigt wird.

4. Verfahren nach Anspruch 1, dadurch gekennzeichnet, daß die Empfangseinrichtung auf einem künstlichen Satelliten vorgesehen ist, der die Erde umwandert und der dadurch auf einer kreisförmigen, im wesentlichen konstanten Erdumlaufbahn gehalten wird, daß er zu verschiedenen Zeiten von der Erde Fracht empfängt, deren Relativgeschwindigkeit gegenüber dem Erdmittelpunkt viel niedriger ist als die Relativeschwindigkeit des genannten Satelliten und von Fracht aus überwiegend ußerirdischem Material, das sich auf einer stark elliptischen Erdumlaufbahn mit einer vial höheren Relativgeschwindigkeit gegenüber dem Ermittelpunkt bewegt als der Satellit.

5. Verfahren nach Anspruch 4, in dem mit einer sehr großen Schöpfeinrichtung Gase aus der obersten Atmosphäre abgeschöpft werden und die Wirkung des Luftwiderstandes dieser Schöpfeinrichtung dadurch kompensiert wird, daß wiederholt Fracht empfangen wird, die zum größten Teil aus außerirdischem Material besteht, das sich auf einer vorlaufenden stark elliptischen Erdumlaufbahn bewegt.

6. Verfahren nach Anspruch 5, dadurch gekennzeichnet, daß zum Abschöpfen der Gase mit einer sehr großen Schöpfeinrichtung das Gas abgekühlt und der größte Teil des abgekühlten Gases derart in innere und schmale Teile der Schöpfeinrichtung wiedereingeführt wird, daß ein Schädigung des Schöpfeinrichtung vermindert wird, daß die Massendichte der Gase in den engen Teilen vergrößert wird und daß diese Gase in den inneren Teilen der Schöpfeinrichtung gekühlt werden.

7. Verfahren nach Anspruch 1, dadurch gekennzeichnet, daß sich die Empfangseinrichtung auf einem künstlichen Satelliten befindet, der sich auf einer niedrigen Erdumlaufbahn bewegt, und daß mit Hilfe einer an dem Satelliten angebrachten, im wesentlichen vertikalen, elektrisch leitfähigen Fessel Elektrizität erhalten wird.

8. Verfahren nach Anspruch 1, dadurch gekennzeichnet, daß sich die Empfangsstation auf einem künstlichen Satelliten befindet, der sich um die Erde bewegt, und daß viel Fracht von einer Umlaufbahn auf eine andere transportiert wird, wobei dazu folgende Schritte durchgeführt werden:

Es wird Fracht an dem und/oder in dem Satelliten angebracht;

an der Empfangseinrichtung des Satelliten wird wiederholt Fracht empfangen, die zum größten Teil außerirdischen Ursprungs ist und sich auf einer stark elliptischen Ercumlaufbahn bewegt, wobei der Satellit durch den Empfang von zahlreichen derartigen Frachtstücken veranlaßt wird, sich von einer niedrigen Erdumlaufbahn zu einer höheren Erdumlaufbahn zu bewegen; und

in der höheren Erdumlaufbahn die genannte Fracht von dem Satelliten freigegeben wird; wobei

der Satellit mit oder ohne darin befindlicher oder mit ihm verbundener, anderer Fracht dadurch auf eine niedrigere Erdumlaufbahn bewegt werden kann, daß er wiederholt Fracht empfängt, die sich auf einer stark elliptischen Erdumlaufbahn bewegt und/oder daß die Empfangseinrichtung von der Erde wiederholt Fracht empfängt, deren Relativegeschwindigkeit gegenüber dem Erdmittelpunkt viel niedriger ist als die Relativgeschwindigkeit des Satelliten.

9. Außerirdische Einrichtung zum Empfangen von mit hoher Geschwindigkeit bewegter Fracht und zum Vermindern der Relativgeschwindigkeit der Fracht auf Null ohne beträchtliche Schädigung der Einrichtung, wobei die Einrichtung umfaßt:

Eine große Prallkammer, die ein Volumen von mehr als 10 m$^3$ hat und eine Öffnung für dem Empfang der Fracht besitzt;

in der Kammer angeordnete, unverbundene Materialien, zum Zusammenwirken mit der Fracht derart, daß eine Schädigung der Wände der Kammer verhindert und die Relativgeschwindigkeit der Fracht auf Null vermindert wird;

Mittel zum derartigen Positionieren der unverbundenen Materialien in der Kammer derart, daß sich diese Materialien beim Eintritt der Fracht in die Kammer an gewünschten Stellen der Kammer befinden; und

Mittel zum Herausnehmen der Fracht aus der Kammer.

10. Einrichtung nach Anspruch 1, dadurch gekennzeichnet, daß die genannte Einrichtung auf einem sich um die Erde bewegenden Satelliten aufgebaut ist, der mindestens eine der folgenden Teile enthält oder damit verbunden ist:

Eine lange, vertikale Fessel, die aus leitendem Material besteht und mit der der Satellit Elektrizität erhält;

eine lange vertikale Fessel, die aus nichtleitendem Material besteht und an ihrem anderen Ende derart mit mindestens einer anderen Einrichtung verbunden ist, daß in der Prallkammer des Satelliten eine Quasischwerkraft wirksam ist;

mehr als eine außerirdische Einrichtung zum Empfangen von schnell bewegter Fracht und zum Herabsetzen der Relativgeschwindigkeit der Fracht auf Null ohne beträchtliche Schädigung irgendeiner Einrichtung;

Mittel zum Herstellen von festen Gegenständen für die Verwendung als die genannten unverbundenen Materialien in der Prallkammer, wobei die genannten festen Gegenstände etwas ferromagnetisches Material enthalten, das von nichtferromagnetischem Material, wie Aluminiumlegierung, umgeben ist;

Mittel zum Einbringen der unverbundenen Materialien in die Prallkammer;

eine Mehrzahl von im Durchmesser großen Spulen, die normal zu der durch die Spulen gehenden Bahn der Fracht sind, wobei durch die Spulen fließende, programmierte Ströme derartige Magnetfelder arzeugen, daß die mindestens teilweise ferromagnetische Fracht in eine Bahn gelenkt wird, die näher bei der gewünschten Bahn liegt;

eine Mehrzahl von im Durchmesser großen Spulen, die die Mittellinie und Hauptteile der Prallkammer umgeben, wobei durch diese Spulen fließende, programmierte Ströme magnetische Kräfte erzeugen, die eine gewünschte Positionierung der genannten Materialien und anderer Dinge in der genannten Kammer, die ferromagnetisch sind, bewirken oder die diese Materialien und/oder Fracht aus der Kammer herausbewegen können;

eine große Schöpfeinrichtung mit einer Mehrzahl von Verschlußteilen die geeignet sind, die Schöpfeinrichtung zu veranlassen, den Luftwiderstand zu verändern oder die richtige Orientierung, Fluglage und Flughöhe aufrechtzuerhalten, wobei diese Schöpfeinrichtung Gase aus der obersten Atmosphäre aufnimmt;

mindestens einen Einwegverschluß in Kombination mit mindestens einem wiederverwendbaren Verschluß für die von der Fracht durchwanderte Öffnung;

eine weitere in die Prallkammer führende und an deren anderem Ende angeordnete Öffnung, wobei Fracht zu verschiedenen Zeiten durch diese Öffnungen tritt und, wenn eine Öffnung für·den Durchtritt von Fracht offen ist, die andere Öffnung geschlossen ist;

Mittel zum schnellen Abziehen von Gasen und Dämpfen von der Prallkammer, wobei die Gase und Dämpfe Fracht oder zersetzte unverbundene Materialien sein können;

Mittel zum Abziehen von Wärmeenergie von Fracht und von unverbundenen Materialien von der Prallkammer;

eine Mehrzahl von in der Kammer angeordneten Ketten, die mit einigen anderen Ketten verbunden sind, wobei einige dieser Ketten mit nicht innerhalb der Kammer befindlichen Teilen der genannten Einrichtung verbunden sind, einige der Ketten mit einem massiven Schild verbunden sind und die Ketten und der Schild eine Einrichtung bilden, die die Geschwindigkeiten der Fracht und der unverbundenen Auffangmaterialien etwas vermindert und die Wände der Kammer etwas vor iner Schädigung schützt;

eine Mehrzahl von sich rückwärtsbewegenden, stoßdämpfenden Türen, die den Impuls einiger der unverbundenen Materialien und der Fracht derart aufnehmen, daß die genannte Einrichtung nicht beträchtlich geschädigt wird, und die die Verminderung der Relativgeschwindigkeit der Fracht auf Null unterstützen;

eine zweite Mehrzahl von stoßdämpfenden Türen, die am entgegengesetzten, kleineren Ende der Prallkammer angeordnet sind, wobei wenn eine der stoßdämpfenden Türen offen ist, eine andere der stoßdämpfenden Türen geschlossen ist.

11. Einrichtung nach Anspruch 9, dadurch gekennzeichnet, daß die genannte Einrichtung auf dem Mond aufgebaut ist und mindestens einen der folgenden Teile enthält:

Mittel zum Einbringen der unverbundenen Materialien in die Kammer;

Mittel zum Herausnehmen der unverbundenen Materialien aus der Kammer;

Mittel zum Verarbeiten, Reinigen, Erzeugen und/oder Transportieren der unverbundenen Materialien von innerhalb der Einrichtung, aber außerhalb der Kammer gelegenen Stellen zu anderen Stellen innerhalb der Einrichtung;

Mittel zum Abwerfen der unverbundenen Materialien, wobei, wenn zu den unverbundenen Materialien Flüssigkeiten gehören, die Abwerfmittel Mittel zum Bilden und Abwerfen von Tropfen aus den Flüssigkeiten und/oder Mittel zum Bilden und Einführen von Sprühnebeln in die Kammer umfassen;

Mittel zum Abdichten der Kammer gegenüber der Kammer dienende Mittel, die die Mittel zum schnellen Öffnen und Schließen umfassen;

mindestens einem Einwegverschluß in Kombination mit mindestens einem wiederverwertbaren Verschluß für die von der Fracht durchwanderte Öffnung, wobei der Einwegverschluß eine aus Material hoher Festigkeit bestehende, dünne Membran besitzt, die dazu dient, Gase unter einem Dampfdruck von einigen Millimetern zu enthalten und die beim Aufprall der Fracht reißt, wobei die Struktur des Einwegverschlusses bis auf den von der Fracht durchwanderten Bereich zum größten Teil intakt bleibt;

Mittel zum Schieben der unverbundenen Materialien von innerhalb der Kammer längs deren Seitenwände und/oder der Bodenwand gelegenen Stellen zu gewünschten Stellen, die näher bei der Mittellinie der Kammer liegen;

eine Mehrzahl von im Durchmesser großen Spulen, die normal zu der durch die Spulen gehenden Bahn der Fracht sind, wobei durch die Spulen fließende, programmierte Ströme derartige Magnetfelder erzeugen, daß die mindestens teilweise ferromagnetische Fracht in eine Bahn gelenkt wird, die näher bei der gewünschten Bahn liegt, und diese Spulen außerhalb der Kammer angeordnet sind und/oder die Kammer umgeben;

Mittel zum schnellen Abziehen von Gasen und Dämpfen von der Prallkammer, wobei die Gase und Dämpfe Fracht oder zersetzte unverbundene Materialien sein künnen;

Mittel zum Abziehen von Wärmeenergie von Fracht und von unverbundenen Materialien von der Prallkammer;

eine Mehrzahl von in der Kammer angeordneten Ketten, die mit einigen anderen Ketten verbunden sind, wobei einige dieser Ketten mit nicht innerhalb der Kammer befindlichen Teilen der genannten Einrichtung verbunden sind, einige der Ketten mit einem massiven Schild verbunden sind und die Ketten und der Schlid eine Einrichtung bilden, die die Geschwindigkeiten der Fracht und der unverbundenen Auffangmaterialien etwas vermindert und die Wände der Kammer etwas vor einer Schädigung schützt;

eine Netzanordnung zum Trennen von fallender größerer Fracht von kleineren unverbundenen Materialien und/oder flüssigen unverbundenen Materialien;

mindestens eine zusätzliche Kammer, die an beiden Enden Öffnungen besitzt, die bis auf den Durchtritt von Fracht dicht verschlossen sind, wobei unverbundene Materialien, die sich innerhalb der zusätzlichen Kammer befinden, sich von derartigen Materialien in anderen zusätzlichen Kammern und/oder in der Prallkammer unterscheiden können.

**Revendications**

1. Procédé de transport d'une cargaison de plus de 10 kg, d'un emplacement d'expédition à un emplacement récepteur extraterrestre, le procédé comprenant les étapes suivantes:

la propulsion de la cargaison le long d'un trajet allant de l'emplacement d'expédition vers l'emplacement de réception d'une manière telle que la cargaison, lorsqu'elle pénètre à l'emplacement de réception, a une vitesse relative par rapport à cet emplacement de réception, qui dépasse 1600 m/s,

la disposition d'une installation de réception à l'emplacement de réception, cette installation ayant une ouverture alignée sur une partie au moins dudit trajet et donnant accès à une chambre d'impact dont le volume est au moins égal à 10 mètres cubes,

l'introduction, dans la chambre d'impact, de matériaux destinés à interagir avec la cargaison de manière que la vitesse relative de la cargaison et de la chambre soit réduite à une valeur nulle sans détérioration notable de la chambre, les matériaux étant constitués de morceaux solides et/ou de liquide afin que la masse totale des matériaux dépasse cent fois celle de la cargaison, et les matériaux étant disposés sur le trajet de la cargaison lorsque celle-ci pénètre dans la chambre d'impact, et

l'extraction de la cargaison de la chambre d'impact.

2. Procédé selon la revendication 1, dans lequel la cargaison se fragmente lors de l'impact sur lesdits matériaux placés dans la chambre d'impact, le procédé comprenant l'étape de séparation des fragments de la cargaison de la chambre d'impact et des matériaux de cette chambre, les fragments de la cargaison comprenant des matières liquides, solides, sous forme de vapeurs ou de gaz dont certaines s'associent physiquement et/ou chimiquement aux matériaux de la chambre d'impact.

3. Procédé selon la revendication 1, dans lequel la cargaison ou une partie de la cargaison est conditionnée de manière qu'elle puisse passer d'une vitesse relative dépassant 1600 m/s à une vitesse relative nulle dans la chambre d'impact sans détérioration appréciable de la cargaison ou d'une partie de la cargaison.

4. Procédé selon la revendication 1, dans lequel l'installation de réception est placée sur un satellite artificiel suivant une orbite autour de la Terre et conservant une orbite circulaire sensiblement constante autour de la Terre par réception, à des moments diférents, d'une cargaison provenant de la Terre et dont la vitesse relative par rapport au centre de la Terre est bien inférieure à la vitesse relative du satellite et d'une cargaison d'un matériau essentiellement extraterrestre dont le trajet recouvre une orbite elliptique élevée formée autour de la Terre et dont la vitesse par rapport au centre de la Terre est bien supérieure à celle du satellite.

5. Procédé selon la revendication 4, comprenant en outre le puisage de gaz de l'atmosphère supérieure par utilisation d'une très grande écope, la traînée produite par l'écope étant compensée par la réception en série d'une cargaison de matériau essentiellement extraterrestre dont la trajectoire est une orbite très elliptique qui progresse autour de la Terre.

6. Procédé selon la revendication 5, dans lequel l'étape de puisage de gaz à l'aide d'une très grande écope comprend les étapes de refroidissement du gaz et de réintroduction de la majorité du gaz refroidi dans les parties internes et étroites de l'écope de manière que la détérioration de l'écope soit réduite, que la densité massique des gaz se trouvant dans les parties étroites soit accrue, et que les gaz des parties internes de l'écope soient refroidis.

7. Procédé selon la revendication 1, dans lequel l'installation de réception est disposé sur un satellite artificiel qui parcourt une orbite terrestre basse, et le procédé comprend en outre l'étape d'obtention d'électricité par utilisation d'une ligne conductrice de l'électricité et sensiblement verticale, fixée au satellite.

8. Procédé selon la revendication 1, dans lequel l'emplacement récepteur est placé sur un satellite artificiel ayant une orbite autour de la Terre, et le procédé comprend l'étape de transport d'une quantité importante de cargaison d'une orbite à une autre, l'étape comprenant les étapes suivantes:

la fixation d'une cargaison au satellite et/ou dans celui-ci,

la réception à l'emplacement récepteur du satellite, de cargaisons en série essentiellement constituées de matériaux extraterrestres dont le trajet correspond à une orbite très elliptique qui progresse autour de la Terre, la réception de nombreuses cargaisons provoquant le déplacement du satellite d'une orbite terrestre basse à une orbite terrestre plus haute,

la séparation de la cargaison du satellite sur l'orbite terrestre plus haute,

le satellite pouvant se déplacer, avec ou sans cargaisons différentes à l'intérieur et/ou fixées à lui, vers une orbite terrestre inférieure par réception en série de cargaisons dont le trajet est une orbite très elliptique qui régresse autour de la Terre et/ou l'emplacement récepteur reçoit une cargaison en série provenant de la Terre, ayant une vitesse relative par rapport au centre de la Terre qui est bien inférieure à la vitesse relative du satellite.

9. Installation extraterrestre destinée à recevoir une cargaison à grande vitesse et à réduire la vitesse relative de la cargaison à une valeur nulle sans détérioration notable de l'installation, celle-ci comprenant

une grande chambre d'impact ayant un volume supérieur à 10 mètres cubes et ayant une ouverture pour le passage de la cargaison,

les matériaux non fixés placés dans la chambre est destinés à interagir avec la cargaison afin que les parois de la chambre ne puissent pas être détériorées et que la vitesse relative de la cargaison soit réduite à zéro,

un dispositif destiné à disposer les matériaux non fixés à l'intérieur de la chambre de manière que ces matériaux se trouvent à des emplacements choisis dans la chambre au moment de l'entrée de la cargaison dans la chambre, et

un dispositif destiné à retirer la cargaison de la chambre.

10. Installation selon la revendication 9, dans laquelle l'installation est construite sur un satellite artificiel qui se déplace sur une orbite terrestre et le satellite contient l'un au moins des éléments suivants ou est fixé à un tel élément au moins:

une longue ligne verticale d'un matériau conducteur grâce auquel le satellite obtient de l'électricité,

une longue ligne verticale d'un matériau non conducteur qui est fixée à son autre extrémité à au moins une installation différente afin qu'il existe une force de pseudo-gravitation dans la chambre de réception du satellite,

plusieurs installations extraterrestres destinées à recevoir une cargaison à grande vitesse et à réduire la vitesse relative de la cargaison à une valeur nulle sans détérioration notable d'une installation quelconque,

un dispositif de fabrication d'éléments solides destinés à être utilisés comme matériau non fixé dans la chambre d'impact, ces éléments solides comprenant un matériau ferro-magnétique entouré par un métal non ferro-magnétique tel qu'un alliage d'aluminium,

un dispositif destiné à introduire les matériaux non fixés dans la chambre d'impact,

plusieurs enroulements de grand diamètre qui sont perpendiculaires à la trajectoire de la cargaison qui passe dans les enroulements, des courants programmés circulant dans les enroulements formant des champs magnétiques tels que la cargaison dont une partie au moins est ferro-magnétique, suive un trajet plus proche du trajet voulu,

plusieurs enroulements de grand diamètre entourent le centre et les parties principales de la chambre d'impact et des courants programmés circulant dans les enroulements créent des forces magnétiques qui provoquent le positionnement voulu dans la chambre des matériaux et autres choses qui sont ferro-magnétiques, ou peut provoquer le mouvement de ces matériaux et/ou de la cargaison hors de la chambre,

une écope de grande dimension ayant plusieurs parties d'obturation qui peuvent provoquer une variation de la traînée créée par l'écope et le maintien d'un alignement, d'une attitude et d'une altitude convenables par l'écope rassemblant des gaz de l'atmosphère supérieure,

au moins un obturateur consommable, combiné à au moins un obturateur réutilisable pour l'ouverture par laquelle passe la cargaison,

une autre ouverture débouchant dans la chambre d'impact et que est placée à l'autre extrémité de la chambre d'impact, la cargaison passant dans ces ouvertures à des moments différents, une ouverture étant ouverte pour le passage de la cargaison alors que l'autre ouverture est fermée,

un dispositif destiné à extraire rapidement les gaz et vapeurs de la chambre d'impact, les gaz et vapeurs pouvant être formés à partir de la cargaison ou de matériaux non fixés décomposés,

un dispositif destiné à extraire de l'énergie thermique de la cargaison et des matériaux non fixés à l'intérieur de la chambre d'impact,

plusieurs chaînes placées dans la chambre et qui sont fixées à certaines autres chaînes, certaines des chaînes étant fixées à des parties de l'installation qui ne se trouvent pas à l'intérieur de la chambre, certaines des chaînes étant fixées à un organe protecteur massif, les chaînes et l'organe protecteur formant un dispositif atteignant dans une certaine mesure les vitesses de la cargaison et des matériaux non fixés subissant le choc et protégeant dans une certaine mesure les parois de la chambre contre les détériorations,

plusieurs portes d'amortissement destinées à absorber les chocs et mobiles vers l'arrière, ces portes absorbant l'énergie cinétique de certains des matériaux non fixés et de la cargaison de manière que la détérioration de l'installation soit insignifiante et que la réduction de la vitesse relative de la cargaison à zéro soit facilitée,

un second ensemble de portes d'amortissement, placées à l'extrémité opposée plus petite de la chambre d'impact, l'une des portes d'amortissement étant ouverte lorsqu'une autre porte d'amortissement est fermée.

11. Installation selon la revendication 8, dans laquelle l'installation est construite sur la Lune et l'installation contient au moins l'un des éléments suivants:

un dispositif destiné à introduire les matériaux non fixés dans la chambre,

un dispositif destiné à extraire les matériaux non fixés de la chambre,

un dispositif de traitement, de purification, de préparation et/ou de transport des matériaux non fixés à partir d'emplacements se trouvant à l'intérieur de l'installation mais à l'extérieur de la chambre, à des emplacements différents à l'intérieur de l'installation,

un dispositif destiné à laisser tomber les matériaux non fixés, ce dispositif comprenant, lorsque les matériaux non fixés comprennent des liquides, un dispositif destiné à former et laisser tomber des globules des liquides et/ou un dispositif destiné à former et introduire des pulvérisations dans la chambre;

un dispositif destiné à fermer de manière étanche la chambre par rapport à l'ouverture, ce dispositif comprenant un dispositif à ouverture et fermeture rapides,

au moins un obturateur consommable combiné à au moins un obturateur réutilisable pour l'ouverture par laquelle passe la cargaison, l'obturateur consommable comprenant une mince membrane d'un matériau robuste destiné à contenir des gaz ayant une tension de vapeur d'une pression égale à 2 mm et à se rompre lors du choc sur une cargaison, l'obturateur consommable retenant la plus grande partie de son intégrité mécanique sauf dans la zone dans laquelle passe la cargaison,

un dispositif destiné à pousser les matériaux non fixés à partir d'emplacements qui se trouvent dans la chambre le long de parois latérales et/ou inférieures de la chambre, à des emplacements voulus qui sont plus proches de l'axe central de la chambre,

plusieurs enroulements de grand diamère qui sont perpendiculaires au trajet de la cargaison qui passe dans les enroulements, des courants programmés circulant dans les enroulements créant des champs magnétiques tels que la cargaison dont une partie au moins est ferro-magnétique, est dirigée suivant une trajectoire plus proche de la trajectoire voulue, les enroulements étant placés à l'extérieur de la chambre et/ou autour de celle-ci,

un dispositif destiné à extraire rapidement des gaz ou vapeurs de la chambre d'impact, les gaz et vapeurs pouvant provenir de la cargaison ou de matériaux non fixés décomposés,

un dispositif destiné à extraire de l'énergie thermique de la cargaison et des matériaux non fixés à l'intérieur de la chambre,

plusieurs chaînes placées dans la chambre et qui sont fixées à certaines autres chaînes, certaines des chaînes étant fixées à des parties de l'installation qui ne se trouvent pas à l'intérieur de la chambre, certaines des chaînes étant fixées à un organe protecteur massif, les chaînes et l'organe protecteur formant un dispositif destiné à atténuer dans une certaine mesure les vitesses de la cargaison et des matériaux non fixés à la suite du choc et à protéger dans une certaine mesure les parois de la chambre contre la détérioration,

un dispositif à filet destiné à séparer des cargaisons relativement grosses qui tombent de matériaux plus petits non fixés et/ou de matériaux liquides non fixés, et

au moins une chambre supplémentaire ayant des ouvertures à ses deux extrémités, les ouvertures étant fermées de manière étanche, à l'exception du passage de la cargaison, les matériaux non fixés placés dans la chambre supplémentaire pouvant être différents de ceux d'autres chambres supplémentaires et/ou de la chambre d'impact.

E /GEO   L-1 \ M /L-2                                      SHEO B

FIG. 1

2R

• E                    X

LEO        2P        FIG. 2                GEO

11E                                      16E
                                                      18E
         12E
                        13E
E A R T H                                14E
                                         15E

FIG. 3

9

8 I        8A
                        4M
LLO        5M  7M
                -M-

FIG. 4

1

FIG. 5

2

0 158 821

FIG. 5A

FIG. 6

FIG. 7

FIG. 8

0 158 821

FIG. 9

-341-

2

-27-

321

321

301

311

281

261

203

SHEO B

205

201

207

216

215

214

E

213

X

FIG. 10

FIG. 11

FIG. 12

67

69

270

-264-
266

266

12

-11-

63

25b

77 61

4A

55

-217-

53

20°

761

541

17 59 57

51

140°

4A

17 59 57

57

59

16 -4-

71

73

0 158 821

7

17

77 801

75 81

79

761

FIG. 13

FIG. 14

FIG. 15

FIG. 16

FIG. 17

FIG. 18

FIG. 19

FIG. 21

COLD AIR

VERY HOT AIR

TO 330

TO 350

343

347

352

FIG. 20

327

325

323

324

326

326

326

320

322

C.L.

320

324

323

326

326

326

322

310

330- 332

340

350

354

364

360

370

380

380

336

380

358

368

352

356

300

390

392

0 158 821